# EUROPEAN PATENT APPLICATION

(11) **EP 4 800 199 A1**
(43) Date of publication of application: **02.09.2026**
(21) Application number: 24893598.3
(22) Date of filing: 22.11.2024
(51) Int. Cl.: E04H 4/16, G05D 1/43, G05D 1/243, G05D 1/242, G05D 1/65, G05D 1/661, G05D 1/633, G05D 1/644, G05D 1/648, G05D 105/10

(54) **ROBOTIC POOL CLEANER CONTROL METHOD AND APPARATUS, AND ROBOTIC POOL CLEANER**

(30) Priority: 23.11.2023 CN 202323180873 U; 24.11.2023 CN 202311589130
(71) Applicant: WYBOTICS Co., LTD., Tianjin 300462 (CN)
(72) Inventor: LI, Cheng, Tianjin 300462 (CN); LI, Xiaotian, Tianjin 300462 (CN); TONG, Xinming, Tianjin 300462 (CN); WANG, Mengqi, Tianjin 300462 (CN); SONG, Jianhong, Tianjin 300462 (CN)
(74) Representative: Winter, Brandl - Partnerschaft mbB
(86) International application number: PCT/CN2024/133899
(87) International publication number: WO 2025/108445

(57) **Abstract**

The present application discloses a control method and device for a pool cleaning robot, and a pool cleaning robot. The method includes: acquiring a position or a direction signal related to the pool cleaning robot; and controlling the pool cleaning robot based on the position or the direction signal.

## Description

The present application claims priority to Chinese Patent Application No. 2023115891309, filed on November 24, 2023 and entitled "Return-to-station Method and Device for Underwater Cleaning Robot and Underwater Cleaning Robot", and Chinese Patent Application No. 2023231808739, filed on November 23, 2023 and entitled "Pool Cleaning Robot and Pool Cleaning System with same", the entire contents of which are incorporated herein by reference.

### TECHNICAL FIELD

The present application relates to the technical field of robots, and in particular, to a control method and device for a pool cleaning robot, and a pool cleaning robot.

### BACKGROUND

With the development of computer technology, robot technology has also advanced rapidly. For example, users utilize vacuum cleaning robots to clean household floors, window cleaning robots to clean residential windows, and pool cleaning robots to clean pools, etc.

### SUMMARY

Embodiments of the present application provide a control method and device for a pool cleaning robot, and a pool cleaning robot, which can control the pool cleaning robot to automatically return to a station, thereby improving the intelligence level of the pool cleaning robot. The technical solutions are as follows.

In an aspect, a control method for a pool cleaning robot is provided. The method includes:
acquiring a position or a direction signal related to the pool cleaning robot; and
controlling the pool cleaning robot based on the position or the direction signal.

In one possible implementation, acquiring the position or the direction signal related to the pool cleaning robot includes:
determining the position of the pool cleaning robot in a pool, in response to a control instruction for the pool cleaning robot, wherein the position includes a pool bottom and a pool wall of the pool; and determining a target movement direction based on the position of the pool cleaning robot in the pool, wherein the target movement direction is a direction approaching a charging station; and
controlling the pool cleaning robot based on the position or the direction signal includes:
controlling the pool cleaning robot to return to the station based on the target movement direction.

In one possible implementation, determining the position of the pool cleaning robot in the pool, in response to the control instruction for the pool cleaning robot, includes:
determining a posture of the pool cleaning robot, in response to the control instruction for the pool cleaning robot; and
determining the position of the pool cleaning robot in the pool based on the posture of the pool cleaning robot.

In one possible implementation, determining the target movement direction based on the position of the pool cleaning robot in the pool includes:
acquiring an environment image around the pool cleaning robot and/or a signal sent by the charging station, in a case where the pool cleaning robot is located at the pool bottom; and determining the target movement direction based on the environment image and/or the signal; and/or
acquiring the environment image around the pool cleaning robot and/or the signal sent by the charging station, in a case where the pool cleaning robot is located on the pool wall; and determining the target movement direction based on the environment image and/or the signal.

In one possible embodiment, determining the target movement direction based on the environment image and/or the signal includes:
determining whether the charging station is present in the environment image; determining the target movement direction based on a position of the charging station in the environment image, in a case where the charging station is present in the environment image; controlling the pool cleaning robot to rotate and reacquire an environment image, in a case where no charging station is present in the environment image; and determining the target movement direction based on the reacquired environment image; or
determining the target movement direction based on a signal parameter of the signal, wherein the signal parameter includes at least one of a signal reception moment and a signal strength; or
determining whether the charging station is present in the environment image; determining the target movement direction based on the position of the charging station in the environment image and the signal parameter of the signal, in a case where the charging station is present in the environment image; controlling the pool cleaning robot to rotate and reacquire an environment image and a signal based on the signal parameter of the signal, in a case where no charging station is present in the environment image; and determining the target movement direction based on the reacquired environment image and the reacquired signal.

In one possible implementation, the signal is an acoustic signal, the pool cleaning robot includes at least two signal reception units, and determining the target movement direction based on the signal parameter of the signal includes:
determining the target movement direction of the pool cleaning robot based on a time difference between the signal reception moments when the at least two signal reception units receive the acoustic signal; or
determining the target movement direction of the pool cleaning robot based on a strength difference between the signal strengths of the acoustic signal received by the at least two signal reception units; or
determining the target movement direction of the pool cleaning robot based on the time difference between the signal reception moments when the at least two signal reception units receive the acoustic signal, and the strength difference between the signal strengths of the acoustic signal received by the at least two signal reception units.

In one possible implementation, determining whether the charging station is present in the environment image includes:
inputting the environment image into a target detection model, performing target detection on the environment image through the target detection model to determine whether a target detection box is present in the environment image, wherein the target detection box is configured to indicate the position of the charging station; determining that the charging station is present in the environment image, in a case where the target detection box is present in the environment image; and determining that no charging station is present in the environment image, in a case where no target detection box is present in the environment image; or
determining whether a cluster area of a preset color is present in the environment image, wherein the preset color corresponds to light with a preset wavelength that is emitted by the charging station; determining that the charging station is present in the environment image, in a case where the cluster area of the preset color is present; and determining that no charging station is present in the environment image, in a case where no cluster area of the preset color is present; or
determining whether an area matched with a preset pattern template is present in the environment image, wherein the preset pattern template corresponds to a pattern on the charging station; determining that the charging station is present in the environment image, in a case where the area matched with the preset pattern template is present in the environment image; and determining that no charging station is present in the environment image, in a case where no area matched with the preset pattern template is present in the environment image.

In one possible implementation, determining the target movement direction based on the environment image and/or the signal, in a case where the pool cleaning robot is located on the pool wall, includes:
controlling the pool cleaning robot to move towards the pool bottom, in a case where the signal parameter of the signal conforms to a preset parameter condition;
acquiring the environment image around the pool cleaning robot and/or reacquiring a signal sent by the charging station, in a case where the pool cleaning robot reaches the pool bottom; and
determining the target movement direction based on the environment image and/or the reacquired signal.

In one possible implementation, the charging station is located on the pool wall, and controlling the pool cleaning robot to return to the station based on the target movement direction includes:
controlling the pool cleaning robot to move in the target movement direction, in a case where the pool cleaning robot is located at the pool bottom; and controlling the pool cleaning robot to climb up the wall to dock with the charging station, in a case where the pool cleaning robot moves to a position below the charging station; and/or
controlling the pool cleaning robot to return to the station based on a geometric relationship between the target movement direction and the pool wall where the pool cleaning robot is located, in a case where the pool cleaning robot is located on the pool wall.

In one possible implementation, controlling the pool cleaning robot to return to the station based on the geometric relationship between the target movement direction and the pool wall where the pool cleaning robot is located includes:
controlling the pool cleaning robot to move in the target movement direction until the pool cleaning robot docks with the charging station, in a case where an included angle between the target movement direction and the pool wall where the pool cleaning robot is located is less than or equal to a preset included angle; and
controlling the pool cleaning robot to move towards the pool bottom, in a case where the included angle between the target movement direction and the pool wall where the pool cleaning robot is located is greater than the preset included angle; redetermining the target movement direction, in a case where the pool cleaning robot reaches the pool bottom; and controlling the pool cleaning robot to return to the station based on the redetermined target movement direction.

In one possible implementation, controlling the pool cleaning robot to climb up the wall to dock with the charging station, in a case where the pool cleaning robot moves to the position below the charging station includes:
controlling the pool cleaning robot to climb up the wall, in a case where the pool cleaning robot moves to the position below the charging station;
controlling the pool cleaning robot to retreat downwards, in a case where the pool cleaning robot gets stuck while climbing up the wall; and
controlling the pool cleaning robot to adjust its posture and/or position and then climb up the wall again to dock with the charging station.

In one possible implementation, after controlling the pool cleaning robot to return to the station based on the target movement direction, the method further includes:
controlling the pool cleaning robot to attach onto the pool wall near the charging station and sending a prompt signal to an associated terminal of the pool cleaning robot, in a case where the pool cleaning robot fails to complete returning to the station after a preset duration, wherein the prompt signal is configured to prompt retrieval of the pool cleaning robot near the charging station; or
controlling the pool cleaning robot to move to the pool bottom below the charging station and sending the prompt signal to the associated terminal of the pool cleaning robot, in a case where the pool cleaning robot fails to complete returning to the station after the preset duration.

In one possible implementation, before determining the position of the pool cleaning robot in the pool, in response to the control instruction for the pool cleaning robot, the method further includes:
acquiring a collision signal sent by the charging station, in a case where the pool cleaning robot performs a cleaning operation on the pool wall, wherein the collision signal is configured to indicate a distance between the pool cleaning robot and the charging station; and
controlling the pool cleaning robot to avoid the charging station based on the collision signal.

In an aspect, a control device for a pool cleaning robot is provided. The device includes:
a signal acquisition module, configured to acquire a position or a direction signal related to the pool cleaning robot; and
a control module, configured to control the pool cleaning robot based on the position or the direction signal.

In one possible implementation, the signal acquisition module includes a position determination module and a movement direction determination module.

The position determination module is configured to determine a position of the pool cleaning robot in a pool in response to a control instruction for the pool cleaning robot, wherein the position includes a pool bottom and a pool wall of the pool.

The movement direction determination module is configured to determine a target movement direction based on the position of the pool cleaning robot in the pool, wherein the target movement direction is a direction approaching a charging station.

The control module is configured to control the pool cleaning robot to return to the station based on the target movement direction.

In one possible implementation, the position determination module is configured to determine a posture of the pool cleaning robot, in response to the control instruction for the pool cleaning robot; and determine the position of the pool cleaning robot in the pool based on the posture of the pool cleaning robot.

In one possible implementation, the movement direction determination module is configured to acquire an environment image around the pool cleaning robot and/or a signal sent by the charging station, in a case where the pool cleaning robot is located at the pool bottom; determine the target movement direction based on the environment image and/or the signal; and/or acquire the environment image around the pool cleaning robot and/or the signal sent by the charging station, in a case where the pool cleaning robot is located on the pool wall; and determine the target movement direction based on the environment image and/or the signal.

In one possible implementation, the movement direction determination module is configured to determine whether the charging station is present in the environment image; determine the target movement direction based on a position of the charging station in the environment image, in a case where the charging station is present in the environment image; control the pool cleaning robot to rotate and reacquire an environment image, in a case where no charging station is present in the environment image; and determine the target movement direction based on the reacquired environment image; or
determine the target movement direction based on a signal parameter of the signal, wherein the signal parameter includes at least one of a signal reception moment and a signal strength; or
determine whether the charging station is present in the environment image; determine the target movement direction based on the position of the charging station in the environment image and the signal parameter of the signal, in a case where the charging station is present in the environment image; control the pool cleaning robot to rotate and reacquire an environment image and a signal based on the signal parameter of the signal, in a case where no charging station is present in the environment image; and determine the target movement direction based on the reacquired environment image and the reacquired signal.

In one possible implementation, the signal is an acoustic signal. The pool cleaning robot includes at least two signal reception units. The movement direction determination module is configured to determine a target movement direction of the pool cleaning robot based on a time difference between the signal reception moments when the at least two signal reception units receive the acoustic signal; or determine the target movement direction of the pool cleaning robot based on a strength difference between the signal strengths of the acoustic signal received by the at least two signal reception units; or determine the target movement direction of the pool cleaning robot based on the time difference between the signal reception moments when the at least two signal reception units receive the acoustic signal, and the strength difference between the signal strengths of the acoustic signal received by the at least two signal reception units.

In one possible implementation, the movement direction determination module is configured to input the environment image into a target detection model, perform target detection on the environment image through the target detection model to determine whether a target detection box is present in the environment image, wherein the target detection box is configured to indicate the position of the charging station; determine that the charging station is present in the environment image, in a case where the target detection box is present in the environment image; and determine that no charging station is present in the environment image, in a case where no target detection box is present in the environment image; or
determine whether a cluster area of a preset color is present in the environment image, wherein the preset color corresponds to light with a preset wavelength that is emitted by the charging station; determine that the charging station is present in the environment image, in a case where the cluster area of the preset color is present; and determine that no charging station is present in the environment image, in a case where no cluster area of the preset color is present; or
determine whether an area matched with a preset pattern template is present in the environment image, wherein the preset pattern template corresponds to a pattern on the charging station; determine that the charging station is present in the environment image, in a case where the area matched with the preset pattern template is present in the environment image; and determine that no charging station is present in the environment image, in a case where no area matched with the preset pattern template is present in the environment image.

In one possible implementation, the movement direction determination module is configured to control the pool cleaning robot to move towards the pool bottom, in a case where the pool cleaning robot is located on the pool wall and the signal parameter of the signal conforms to a preset parameter condition; acquire the environment image around the pool cleaning robot and/or reacquire a signal sent by the charging station, in a case where the pool cleaning robot reaches the pool bottom; and determine the target movement direction based on the environment image and/or the reacquired signal.

In one possible implementation, the charging station is located on the pool wall. The control module is configured to control the pool cleaning robot to move in the target movement direction, in a case where the pool cleaning robot is located at the pool bottom; control the pool cleaning robot to climb up the wall to dock with the charging station, in a case where the pool cleaning robot moves to a position below the charging station; and/or control the pool cleaning robot to return to the station based on a geometric relationship between the target movement direction and the pool wall where the pool cleaning robot is located, in a case where the pool cleaning robot is located on the pool wall.

In one possible implementation, the control module is configured to control the pool cleaning robot to move in the target movement direction until the pool cleaning robot docks with the charging station, in a case where an included angle between the target movement direction and the pool wall where the pool cleaning robot is located is less than or equal to a preset included angle; control the pool cleaning robot to move towards the pool bottom, in a case where the included angle between the target movement direction and the pool wall where the pool cleaning robot is located is greater than the preset included angle; redetermine the target movement direction, in a case where the pool cleaning robot reaches the pool bottom; and control the pool cleaning robot to return to the station based on the redetermined target movement direction.

In one possible implementation, the control module is configured to control the pool cleaning robot to climb up the wall, in a case where the pool cleaning robot moves to the position below the charging station; control the pool cleaning robot to retreat downwards, in a case where the pool cleaning robot gets stuck while climbing up the wall; and control the pool cleaning robot to adjust its posture and/or position and then climb up the wall again to dock with the charging station.

In one possible implementation, the control module is further configured to control the pool cleaning robot to attach onto the pool wall near the charging station and send a prompt signal to an associated terminal of the pool cleaning robot, in a case where the pool cleaning robot fails to complete returning to the station after a preset duration, wherein the prompt signal is configured to prompt retrieval of the pool cleaning robot near the charging station; or control the pool cleaning robot to move to the pool bottom below the charging station and send the prompt signal to the associated terminal of the pool cleaning robot, in a case where the pool cleaning robot fails to complete returning to the station after the preset duration.

In one possible implementation, the device further includes an avoidance module. The avoidance module is configured to acquire a collision signal sent by the charging station, in a case where the pool cleaning robot performs a cleaning operation on the pool wall, wherein the collision signal is configured to indicate a distance between the pool cleaning robot and the charging station; and control the pool cleaning robot to avoid the charging station based on the collision signal.

In an aspect, a pool cleaning robot is provided. The pool cleaning robot includes a robot controller. The robot controller includes one or more processors and one or more memories, wherein the one or more memories have stored therein at least one computer program that, when loaded and executed by the one or more processors, causes the one or more processors to implement the control method for the pool cleaning robot.

In an aspect, a computer-readable storage medium is provided. The computer-readable storage medium has stored therein at least one computer program that, when loaded and executed by a processor, causes the processor to implement the control method for the pool cleaning robot.

In an aspect, a computer program product or a computer program is provided. The computer program product or the computer program includes program code stored in a computer-readable storage medium. A processor of a robot controller reads the program code from the computer-readable storage medium and executes the program code to enable the robot controller to perform the control method for the pool cleaning robot.

In an aspect, another pool cleaning robot is provided, including:
a signal acquisition assembly, configured to acquire a position or a direction signal related to the pool cleaning robot; and
a robot controller, configured to control the pool cleaning robot based on the position or the direction signal.

In one possible implementation, the pool cleaning robot further includes:
a robot body, provided with at least one water inlet and at least one water outlet;
a filtering unit, configured to filter a liquid entering through the water inlet, wherein the filtered liquid is discharged through the water outlet; and
walking units, configured to contact with a submerged surface in a pool and rotatable relative to the robot body.

The robot controller is arranged on the robot body.

The signal acquisition assembly is arranged on the robot body and communicates with the robot controller. The signal acquisition assembly can acquire signals from at least two positions on the robot body, and the signals are configured to provide information about the position or a direction of the pool cleaning robot.

In one possible implementation, the signal acquisition assembly includes at least two signal reception units which are arranged at different positions on the robot body; or
the signal acquisition assembly includes one signal reception unit which is movable relative to the robot body between a first position and a second position.

In one possible implementation, the pool cleaning robot has a central section, vertical planes where the walking units at two sides of the robot body are located are defined as a first plane and a second plane. The central section, the first plane and the second plane are parallel to each other, and the central section is located centrally between the first plane and the second plane; and
when at least two signal reception units are provided, vertical planes where the at least two signal reception units are located are respectively arranged at two sides of the central section, and the vertical planes where the signal reception units are located are parallel to the first plane and the second plane; or
when one signal reception unit is provided, a vertical plane where the first position is located and a vertical plane where the second position is located are respectively arranged at two sides of the central section, and are parallel to the first plane and the second plane.

In one possible implementation, a distance between the signal reception unit and a bottom surface of the robot body in a height direction of the pool cleaning robot is not less than 4 cm.

In one possible implementation, the pool cleaning robot further includes:
an amplification unit, communicating with the robot controller and the signal reception unit and configured to amplify signals received by the signal reception unit and then transmit the amplified signals to the robot controller.

In one possible implementation, the signal reception unit is arranged at one side of the robot body in a movement direction; and/or
an installation protrusion is arranged on an upper surface of the robot body, and the signal reception unit is arranged on the installation protrusion of the robot body.

In one possible implementation, the pool cleaning robot further includes:
a posture detection unit, arranged on the robot body and communicating with the robot controller, wherein the robot controller acquires a movement destination of the pool cleaning robot according to the signals from the signal acquisition assembly and controls a movement direction of the pool cleaning robot according to the posture detection unit; and
a suction unit, arranged on the robot body and communicating with the robot controller, wherein the robot controller controls the power of the suction unit according to a signal from the posture detection unit.

In one possible implementation, the pool cleaning robot further includes:
a power storage module, arranged on the robot body and connected to the signal acquisition assembly; and
a wireless charging module and/or a wired charging module, wherein the wireless charging module is arranged at the bottom of the robot body and connected to the power storage module, and the wired charging module is arranged at the bottom of the robot body and connected to the power storage module, and the wired charging module includes a corrosion-resistant electrode plate.

In one possible implementation, at least one of the power storage module, the wireless charging module and the wired charging module is detachably connected to the robot body.

In an aspect, a pool cleaning system is provided, including:
the pool cleaning robot according to the previous aspect; and
a signal generation device, configured to emit a signal, wherein the robot controller controls the pool cleaning robot to move towards a preset position when the signal acquisition assembly acquires the signal; and
during the movement of the pool cleaning robot towards the preset position, a total movement distance of the pool cleaning robot is L1, a movement distance of the pool cleaning robot when a connecting line between the signal generation device and the signal acquisition assembly passes through the robot body is L2, and L2/L1 is less than 50%.

### BRIEF DESCRIPTION OF THE DRAWINGS

To clearly describe the technical solutions in the embodiments of the present application, the accompanying drawings used in describing the embodiments are briefly introduced below. Apparently, the accompanying drawings described below are merely some embodiments of the present application. Those of ordinary skills in the art may derive other drawings from these accompanying drawings without creative efforts.
FIG. 1 is a schematic diagram of a pool cleaning robot at a pool bottom of a pool according to an embodiment of the present application.
FIG. 2 is flowchart of a control method for a pool cleaning robot according to an embodiment of the present application.
FIG. 3 is flowchart of another control method for a pool cleaning robot according to an embodiment of the present application.
FIG. 4 is a schematic diagram showing a pool cleaning robot returning to a station according to an embodiment of the present application.
FIG. 5 is a schematic diagram showing another pool cleaning robot returning to a station according to an embodiment of the present application.
FIG. 6 is a schematic diagram showing yet another pool cleaning robot returning to a station according to an embodiment of the present application.
FIG. 7 is a schematic diagram showing still another pool cleaning robot returning to a station according to an embodiment of the present application.
FIG. 8 is a schematic structural diagram of a control device for a pool cleaning robot according to an embodiment of the present application.
FIG. 9 is a schematic structural diagram of a pool cleaning robot according to an embodiment of the present application.
FIG. 10 is a schematic structural diagram of another pool cleaning robot according to an embodiment of the present application.
FIG. 11 is a schematic structural diagram of still another pool cleaning robot according to an embodiment of the present application.
FIG. 12 is a schematic structural diagram of yet another pool cleaning robot according to an embodiment of the present application.
FIG. 13 is a schematic structural diagram of yet another pool cleaning robot according to an embodiment of the present application.
FIG. 14 is a schematic structural diagram of yet another pool cleaning robot according to an embodiment of the present application.
FIG. 15 is a schematic structural diagram of yet another pool cleaning robot according to an embodiment of the present application.
FIG. 16 is a schematic structural diagram of yet another pool cleaning robot according to an embodiment of the present application.
FIG. 17 is a schematic structural diagram of yet another pool cleaning robot according to an embodiment of the present application.
FIG. 18 is a schematic diagram of a pool cleaning system according to an embodiment of the present application, wherein a sound acquisition assembly is arranged at one side of a robot body in a movement direction, and a pool cleaning robot is located at a pool bottom of a pool.
FIG. 19 is a schematic diagram of a pool cleaning system according to an embodiment of the present application, wherein a sound acquisition assembly is arranged at one side of a robot body in a movement direction, and a pool cleaning robot is located on a pool wall of a pool.
FIG. 20 is a schematic diagram of a pool cleaning system according to an embodiment of the present application, wherein a sound acquisition assembly is arranged on an upper surface of a robot body, and a pool cleaning robot is located at a pool bottom of a pool.
FIG. 21 is a schematic diagram of a pool cleaning system according to an embodiment of the present application, where a sound acquisition assembly is arranged on an upper surface of a robot body, and a pool cleaning robot is located on a pool wall of a pool.

### DETAILED DESCRIPTION OF THE EMBODIMENTS

To make the objectives, technical solutions and advantages of the present application clearer, the implementations of the present application are further described in detail below with reference to the accompanying drawings.

The terms "first" and "second" and the like are used herein to distinguish the same or similar items that perform substantially the same effect and function. It should be understood that there is no logical or chronological dependency among "first", "second" and "n-th", and such terms do not impose any limitations on a quantity or an execution order.

Terms involved in the embodiments of the present application are first introduced.

Pool cleaning robot: a robot configured to perform a pool cleaning task. For example, the pool cleaning robot can clean a pool bottom, a pool wall, and the like of a pool when placed in the pool.

Ultrasonic wave: a mechanical wave with a very short wavelength generally less than 2 cm in air. The ultrasonic wave propagates by a medium and cannot exist in vacuum (such as aerospace). The ultrasonic wave propagates farther in water than in air, and in certain scenarios, the ultrasonic wave can propagate over hundreds of meters in water.

In related technologies, when used to clean the pool, the pool cleaning robot operates until its battery is depleted. After this depletion, the pool cleaning robot stops at the pool bottom, and an operator needs to retrieve the pool cleaning robot by a tool, and continues to use the pool cleaning robot after being charged.

However, in the related technologies, both retrieval and charging need to be manually performed by the operator, resulting in lower efficiency of charging the pool cleaning robot.

After the terms involved in the embodiments of the present application are described, application scenarios provided by the embodiments of the present application are described below.

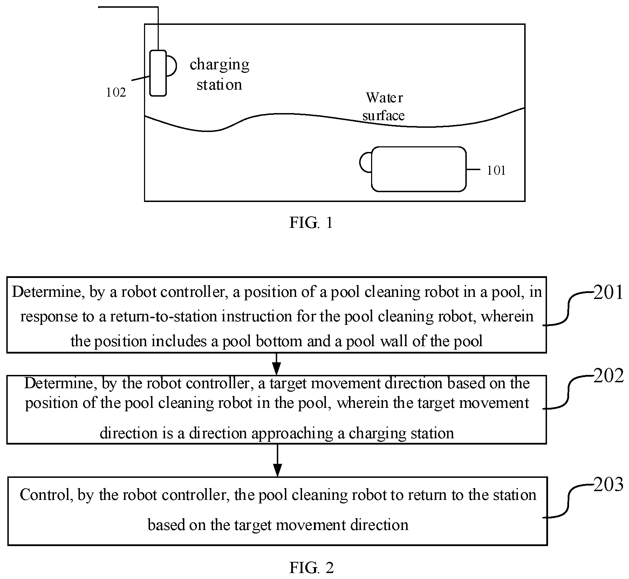

The technical solutions provided by the embodiments of the present application can be applied in a scenario where the pool cleaning robot is controlled to clean the pool bottom (as an example). Referring to FIG. 1, the pool cleaning robot 101 can move on the pool bottom, thereby cleaning the pool bottom. During the movement of the pool cleaning robot 101 on the pool bottom, a water pump of the pool cleaning robot 101 is activated, a liquid in the pool is drawn into a filtering unit of the pool cleaning robot 101 through a water inlet at the bottom of the pool cleaning robot 101 and is filtered by the filtering unit, so that dirt in the liquid remains in the filtering unit, and the filtered liquid is discharged through a water outlet of the pool cleaning robot 101, thereby cleaning the pool bottom. A charging station 102 is arranged in the pool and can be used to charge the pool cleaning robot 101. Certainly, in the embodiments of the present application, the pool cleaning robot 101 further has a wall-climbing function. In addition to cleaning the pool bottom, the pool cleaning robot 101 can also clean the pool wall.

After a control method for the pool cleaning robot according to the embodiments of the present application is adopted, the position of the pool cleaning robot 101 in the pool is determined, in response to a return-to-station instruction for the pool cleaning robot 101. The position includes the pool bottom and the pool wall. A target movement direction is determined based on the position of the pool cleaning robot 101 in the pool, wherein the target movement direction is a direction approaching the charging station. The pool cleaning robot 101 is controlled to return to the station based on the target movement direction. This enables the pool cleaning robot 101 to automatically return to the station from different positions in the pool, and improves the efficiency of charging the pool cleaning robot, thereby enhancing the intelligence level of the pool cleaning robot.

The technical solutions provided by the embodiments of the present application are described below. The embodiments of the present application provide a control method for a pool cleaning robot. Taking an example where the method is performed by a robot controller of the pool cleaning robot, the method includes the following steps.
A: The robot controller acquires a position or a direction signal related to the pool cleaning robot.
B: The robot controller controls the pool cleaning robot based on the position or the direction signal.

The above steps are described below in conjunction with the accompanying drawings.

The technical solutions provided by the embodiments of the present application are described below. FIG. 2 is a flowchart of a control method for a pool cleaning robot according to an embodiment of the present application. Referring to FIG. 2, taking an example where the method is performed by the robot controller of the pool cleaning robot, the method includes the following steps.

201: The robot controller determines the position of the pool cleaning robot in a pool, in response to a control instruction for the pool cleaning robot, wherein the position includes a pool bottom and a pool wall of the pool.

The robot controller is placed in the pool cleaning robot and configured to control the pool cleaning robot. The pool cleaning robot is configured to clean the pool bottom and the pool wall. In a case where the pool cleaning robot is located at the pool bottom, the pool cleaning robot can move on the pool bottom and perform a cleaning operation. Correspondingly, the movement process of the pool cleaning robot further includes movement or rotation of the pool cleaning robot on the pool bottom. Walking units are arranged at the bottom of the pool cleaning robot, and the pool cleaning robot can be controlled to move on the pool bottom by driving the walking units. The walking units include walking wheels, and driving the walking units means driving the walking wheels to rotate, thereby driving the pool cleaning robot to move. In a case where the pool cleaning robot is located on the pool wall, the pool cleaning robot can attach onto the pool wall, move on the pool wall and perform a cleaning operation. A return-to-station instruction is configured to instruct the pool cleaning robot to dock with the charging station, so that the pool cleaning robot is charged through the charging station. The position of the pool cleaning robot in the pool includes the pool bottom and the pool wall of the pool. In other words, during the process of the pool cleaning robot returning to the station, different control logic is adopted based on the position of the pool cleaning robot so as to ensure that the pool cleaning robot can automatically return to the station from both the pool bottom and the pool wall.

202: The robot controller determines a target movement direction based on the position of the pool cleaning robot in the pool, wherein the target movement direction is a direction approaching the charging station.

The target movement direction is the direction approaching the charging station. In some embodiments, the target movement direction is a direction from the pool cleaning robot to the charging station. That is, the target movement direction is not necessarily the movement direction of the pool cleaning robot when returning to the station. In the embodiments of the present application, there are different manners of determining the target movement direction of the pool cleaning robot at different positions. The charging station is located in the pool, and further, the charging station is located at the pool bottom or on the pool wall.

203: The robot controller controls the pool cleaning robot to return to the station based on the target movement direction.

Controlling the pool cleaning robot to return to the station includes controlling the pool cleaning robot to move towards the position where the charging station is located, and completing docking with the charging station.

Through the technical solution provided by the embodiment of the present application, the position of the pool cleaning robot in the pool is determined, in response to the control instruction for the pool cleaning robot, wherein the position includes the pool bottom and the pool wall. The target movement direction is determined based on the position of the pool cleaning robot in the pool, wherein the target movement direction is the direction approaching the charging station. The pool cleaning robot is controlled to return to the station based on the target movement direction. This enables the pool cleaning robot to automatically return to the station from different positions in the pool, and improves the efficiency of charging the pool cleaning robot, thereby enhancing the intelligence level of the pool cleaning robot.

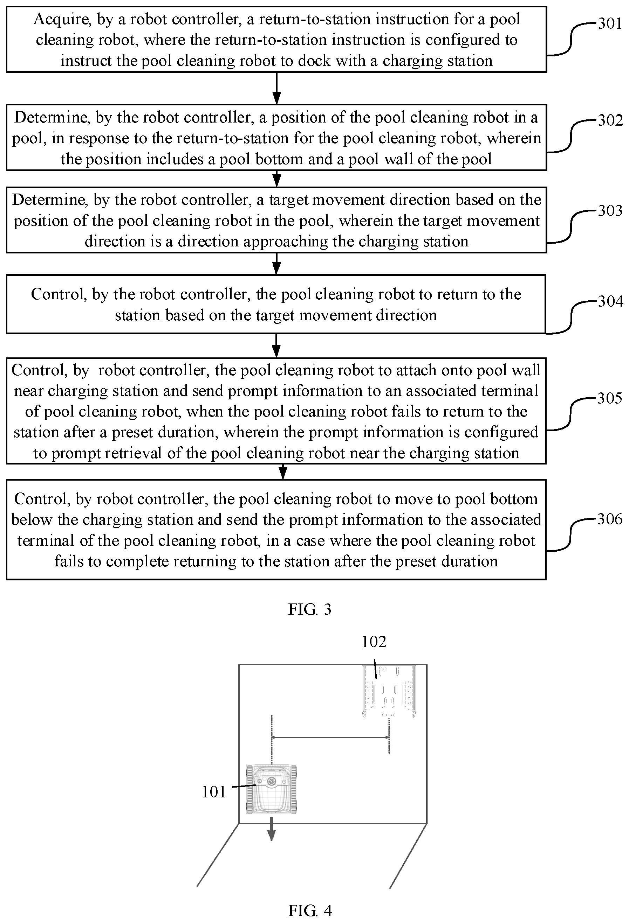

It is to be noted that steps 201 to 203 only provide a brief description of the technical solutions provided by the embodiments of the present application. The technical solutions provided by the embodiments of the present application are described in detail below with reference to some examples. Referring to FIG. 3, the method includes the following steps.

301: A robot controller acquires a control instruction for a pool cleaning robot, wherein the control instruction is configured to instruct the pool cleaning robot to dock with a charging station.

The robot controller is placed in the pool cleaning robot and configured to control the pool cleaning robot. The pool cleaning robot is configured to clean a pool bottom and a pool wall of a pool. In a case where the pool cleaning robot is located on the pool wall, the pool cleaning robot can move on the pool bottom and perform a cleaning operation. Correspondingly, the movement process of the pool cleaning robot further includes movement or rotation of the pool cleaning robot on the pool bottom. Walking units are arranged at the bottom of the pool cleaning robot, and the pool cleaning robot can be controlled to move on the pool bottom by driving the walking units. The walking units include walking wheels, and driving the walking units means driving the walking wheels to rotate, thereby driving the pool cleaning robot to move. In a case where the pool cleaning robot is located on the pool wall, the pool cleaning robot can attach onto the pool wall, move on the pool wall and perform the cleaning operation. A return-to-station instruction is configured to instruct the pool cleaning robot to dock with the charging station, so that the pool cleaning robot is charged through the charging station. In some embodiments, the charging station is bound to the pool cleaning robot and can charge the pool cleaning robot. The charging station is located underwater. As used herein, being located underwater may refer to being partially or completely located underwater, which is not limited in the embodiments of the present application. For example, the charging station is located at the pool bottom. Alternatively, the charging station is located on a water surface, such as on the pool wall. The charging station is equipped with a wireless charging assembly, and correspondingly, the pool cleaning robot further includes a wireless charging unit. Through cooperation between the wireless charging assembly and the wireless charging unit, wireless charging of the pool cleaning robot can be achieved.

In one possible implementation, the robot controller triggers the return-to-station instruction, in a case where a state parameter of the pool cleaning robot conforms to a preset state condition.

The state parameter is configured to reflect a state of the pool cleaning robot. In some embodiments, the state parameter includes at least one of remaining battery power, a duration of single cleaning or an area of single cleaning. The pool cleaning robot is powered by a built-in battery, and the remaining battery power also refers to the current battery level of the built-in battery and can reflect the remaining working time of the pool cleaning robot. The duration of single cleaning refers to the accumulated cleaning duration of the pool cleaning robot when performing a single cleaning task, and the area of single cleaning refers to the accumulated cleaning area of the pool cleaning robot when performing the single cleaning task. The preset state condition is set by a technician according to actual situations, which is not limited in the embodiments of the present application. That the state parameter of the pool cleaning robot conforms to the preset state condition also indicates that the pool cleaning robot needs to be charged.

In this implementation, the return-to-station instruction can be automatically triggered, in a case where the state parameter of the pool cleaning robot conforms to the preset state condition. This achieves intelligent charging of the pool cleaning robot, improving the efficiency of charging the pool cleaning robot.

For example, the robot controller acquires the state parameter of the pool cleaning robot, wherein the state parameter includes at least one of the remaining battery power, the duration of single cleaning or the area of single cleaning. The robot controller triggers the return-to-station instruction, in a case where the remaining battery power is less than or equal to a power threshold, the duration of single cleaning is greater than or equal to a cleaning duration threshold and the area of single cleaning is greater than or equal to a cleaning area threshold.

The power threshold is configured to limit the minimum battery power of the pool cleaning robot, the cleaning duration threshold is configured to limit the duration of single cleaning of the pool cleaning robot, and the cleaning area threshold is configured to limit the area of single cleaning of the pool cleaning robot, to ensure that the remaining battery power of the pool cleaning robot is sufficient to enable the pool cleaning robot to move to the position where the charging station is located. The power threshold, the cleaning duration threshold and the cleaning area threshold are set by the technician according to actual situations, and certainly may be adjusted by an operator as needed. This is not limited in the embodiments of the present application.

In one possible implementation, the robot controller receives the return-to-station instruction sent by the charging station.

The charging station is provided with a communication assembly which can receive a signal and send a signal. In some embodiments, the communication assembly further has a signal forwarding function. That is, in a case where a device cannot directly communicate with the pool cleaning robot, the device can send a signal to the charging station, and the charging station forwards the signal to the pool cleaning robot through the communication assembly, thereby enabling communication between the device and the pool cleaning robot.

To explain the above implementation more clearly, the above implementation is illustrated below through two examples.

Example 1: The robot controller receives the return-to-station instruction sent by the charging station, wherein the return-to-station instruction is actively sent by the charging station.

For example, the charging station is equipped with a return-to-station button, and the charging station sends the return-to-station instruction to the pool cleaning robot when the return-to-station button is pressed.

Example 2: The robot controller receives the return-to-station instruction sent by the charging station, wherein the return-to-station instruction is sent to the charging station by an associated terminal of the pool cleaning robot and then forwarded by the charging station.

The associated terminal of the pool cleaning robot is a terminal bound to the pool cleaning robot and has an authority to control the pool cleaning robot.

In one possible implementation, the robot controller receives the return-to-station instruction sent by the associated terminal of the pool cleaning robot.

In this implementation, the associated terminal can directly communicate with the pool cleaning robot, and the robot controller can directly receive the return-to-station instruction sent by the associated terminal.

It is to be noted that the robot controller can acquire the return-to-station instruction by any one of the above manners. This is not limited in the embodiments of the present application.

Optionally, the following steps can be further performed before step 301.

In one possible implementation, the robot controller acquires a collision signal sent by the charging station, in a case where the pool cleaning robot performs a cleaning operation on the pool wall, wherein the collision signal is configured to indicate a distance between the pool cleaning robot and the charging station. The robot controller controls the pool cleaning robot to avoid the charging station based on the collision signal.

The collision signal is an acoustic signal or a radio frequency signal, which is not limited in the embodiments of the present application.

In this implementation, the collision signal sent by the charging station can be acquired, in a case where the pool cleaning robot performs the cleaning operation on the pool wall. The charging station can be avoided according to the collision signal, thereby ensuring the safety of the pool cleaning robot and the charging station.

For example, the robot controller acquires the collision signal sent by the charging station, in a case where the pool cleaning robot performs the cleaning operation on the pool wall. The robot controller controls the pool cleaning robot to move, in a case where a signal strength of the collision signal is greater than or equal to a preset strength, such that the signal strength of the received collision signal is reduced to below the preset strength. Afterwards, the robot controller continues to control the pool cleaning robot to perform the cleaning operation on the pool wall.

302: The robot controller determines the position of the pool cleaning robot in the pool, in response to the control instruction for the pool cleaning robot, wherein the position includes the pool bottom and the pool wall of the pool.

The position of the pool cleaning robot in the pool includes the pool bottom and the pool wall. In other words, during the process of the pool cleaning robot returning to the station, different control logic is adopted based on the position of the pool cleaning robot so as to ensure that the pool cleaning robot can automatically return to the station from the pool bottom and the pool wall.

In one possible implementation, the robot controller determines the posture of the pool cleaning robot, in response to the control instruction for the pool cleaning robot. The robot controller determines the position of the pool cleaning robot in the pool based on the posture of the pool cleaning robot.

The posture of the pool cleaning robot is determined by a pitch angle or a combination of the pitch angle and a roll angle. Since the position includes the pool bottom and the pool wall, pitch angles and roll angles of the pool cleaning robot at the pool bottom and on the pool wall are significantly different. Therefore, the position of the pool cleaning robot can be determined by using the pitch angle and the roll angle.

In this implementation, the posture of the pool cleaning robot is first determined, in response to the return-to-station instruction, and the position of the pool cleaning robot in the pool is determined by using the posture. The position and the posture are strongly correlated, resulting in higher accuracy of determining the position.

For example, the robot controller acquires the pitch angle or both the pitch angle and the roll angle of the pool cleaning robot through a posture sensor of the pool cleaning robot, in response to the control instruction for the pool cleaning robot. The robot controller determines the posture of the pool cleaning robot based on the pitch angle or both the pitch angle and the roll angle. The robot controller determines the position of the pool cleaning robot in the pool based on the posture of the pool cleaning robot.

The pitch angle is configured to indicate an included angle between a forward direction of the pool cleaning robot and a horizontal plane. The pitch angle is 0°, in a case where the forward direction of the pool cleaning robot is parallel to the horizontal plane. The posture sensor is a gyroscope or a level meter, which is not limited in the embodiments of the present application.

For example, the robot controller acquires the pitch angle of the pool cleaning robot through the posture sensor of the pool cleaning robot, in response to the control instruction for the pool cleaning robot. The robot controller determines the posture of the pool cleaning robot as a translational posture, in a case where the absolute value of the pitch angle is less than or equal to a preset pitch angle. The robot controller determines the posture of the pool cleaning robot as a wall-climbing posture, in a case where the absolute value of the pitch angle is greater than the preset pitch angle. The robot controller determines the position of the pool cleaning robot as the pool bottom, in a case where the posture of the pool cleaning robot is the translational posture. The robot controller determines the position of the pool cleaning robot as the pool wall, in a case where the posture of the pool cleaning robot is the wall-climbing posture.

Alternatively, the robot controller acquires the pitch angle and the roll angle of the pool cleaning robot through the posture sensor of the pool cleaning robot, in response to the control instruction for the pool cleaning robot. The robot controller determines the posture of the pool cleaning robot as the translational posture, in a case where the absolute value of the pitch angle is less than or equal to the preset pitch angle and the absolute value of the roll angle is less than or equal to a preset roll angle. The robot controller determines the posture of the pool cleaning robot as the wall-climbing posture, in a case where the absolute value of the pitch angle is greater than the preset pitch angle and the absolute value of the roll angle is less than or equal to the preset roll angle. The robot controller determines the position of the pool cleaning robot as the pool bottom, in a case where the posture of the pool cleaning robot is the translational posture. The robot controller determines the position of the pool cleaning robot as the pool wall, in a case where the posture of the pool cleaning robot is the wall-climbing posture.

The preset pitch angle and the preset roll angle are set by the technician according to actual situations. This is not limited in the embodiments of the present application.

In one possible implementation, the robot controller determines an operating state of a wall-climbing assembly of the pool cleaning robot, in response to the control instruction for the pool cleaning robot, wherein the wall-climbing assembly is configured to assist the pool cleaning robot in climbing the wall. The robot controller determines the position of the pool cleaning robot based on the operating state of the wall-climbing assembly.

The wall-climbing assembly is also known as a suction assembly. The pool cleaning robot can attach onto the pool wall through the suction assembly and move on the pool wall under the drive of the suction assembly.

In this implementation, the operating state of the wall-climbing assembly is determined, in response to the control instruction for the pool cleaning robot. The position of the pool cleaning robot is determined based on the operating state of the wall-climbing assembly, resulting in higher efficiency of determining the position.

For example, the robot controller determines the operating state of the wall-climbing assembly of the pool cleaning robot, in response to the control instruction for the pool cleaning robot. The robot controller determines the position of the pool cleaning robot as the pool bottom, in a case where the operating state of the wall-climbing assembly is inactive, or the robot controller determines the position of the pool cleaning robot as the pool wall, in a case where the operating state of the wall-climbing assembly is active. It is to be noted that if the wall-climbing assembly of the pool cleaning robot is a water pump, since the water pump has functions of cleaning and wall-climbing, the position of the pool cleaning robot cannot be determined through the above implementation.

303: The robot controller determines a target movement direction based on the position of the pool cleaning robot in the pool, wherein the target movement direction is a direction approaching the charging station.

The target movement direction is the direction approaching the charging station. In some embodiments, the target movement direction is a direction from the pool cleaning robot to the charging station. That is, the target movement direction is not necessarily the movement direction of the pool cleaning robot when returning to the station. In the embodiments of the present application, there are different manners of determining the target movement direction of the pool cleaning robot at different positions. The charging station is located in the pool, and further, the charging station is located at the pool bottom or on the pool wall.

In one possible implementation, the robot controller acquires an environment image around the pool cleaning robot and/or a signal sent by the charging station, in a case where the pool cleaning robot is located at the pool bottom. The robot controller determines the target movement direction based on the environment image and/or the signal.

The signal is configured to guide the pool cleaning robot to return to the station. In some embodiments, the signal serves as a return-to-station signal or a return-to-station guiding signal, namely, a signal configured to guide the pool cleaning robot to return to the station. In some embodiments, the signal is an acoustic signal. In other words, the charging station guides the pool cleaning robot to return to the station by sending the acoustic signal. In some embodiments, the acoustic signal is an ultrasonic signal.

In this implementation, the environment image around the pool cleaning robot and/or the signal sent by the charging station is acquired, in a case where the pool cleaning robot is located at the pool bottom. The target movement direction is determined based on the environment image and/or the signal, resulting in higher accuracy of the target movement direction.

To explain the above implementation more clearly, the above implementation is illustrated below through two parts.

Part 1: the robot controller acquires the environment image around the pool cleaning robot and/or the signal sent by the charging station, in a case where the pool cleaning robot is located at the pool bottom.

In one possible implementation, in a case where the pool cleaning robot is located at the pool bottom, the robot controller acquires the environment image around the pool cleaning robot through an image acquisition assembly of the pool cleaning robot, and/or activates a signal reception assembly of the pool cleaning robot to acquire, by the signal reception assembly, the signal sent by the charging station.

The image acquisition assembly is arranged on the periphery of the pool cleaning robot. One or more image acquisition assemblies are provided. The number of the image acquisition assemblies is not limited in the embodiments of the present application. In a case where one image acquisition assembly is provided, the image acquisition assembly is configured to acquire an environment image of an area directly in front of the pool cleaning robot. In a case where a plurality of image acquisition assemblies are provided, the plurality of image acquisition assemblies are configured to acquire environment images directly in front of, on two sides of and/or directly behind the pool cleaning robot. The signal reception assembly is a signal reception unit, in a case where the signal is the acoustic signal. At least two ultrasonic reception assemblies are provided, which are arranged at different positions on the pool cleaning robot, in a case where the signal reception assembly is the signal reception unit.

In this implementation, the environment image around the pool cleaning robot is acquired by using the image acquisition assembly, and the signal is acquired by using the signal reception assembly, resulting in higher efficiency of acquiring the environment image and the signal.

Part 2: The robot controller determines the target movement direction based on the environment image and/or the signal.

In one possible implementation, the robot controller determines whether the charging station is present in the environment image. The robot controller determines the target movement direction based on the position of the charging station in the environment image, in a case where the charging station is present in the environment image. The robot controller controls the pool cleaning robot to rotate and reacquire an environment image, in a case where no charging station is present in the environment image. The robot controller determines the target movement direction based on the reacquired environment image.

To explain the above implementation more clearly, the above implementation is illustrated below through several parts.
A: The robot controller determines whether the charging station is present in the environment image.

In one possible implementation, the robot controller inputs the environment image into a target detection model, and performs target detection on the environment image through the target detection model to determine whether a target detection box is present in the environment image, wherein the target detection box is configured to indicate the position of the charging station. The robot controller determines that the charging station is present in the environment image, in a case where the target detection box is present in the environment image. The robot controller determines that no charging station is present in the environment image, in a case where no target detection box is present in the environment image.

The target detection model is configured to recognize the charging station in the input image, and is trained based on a plurality of sample environment images and labeled detection boxes corresponding to the sample environment images, wherein each of the labeled detection boxes is configured to indicate the position of the charging station in a corresponding sample environment image. In the embodiments of the present application, the target detection model is any type of target detection model, which is not limited in the embodiments of the present application.

In this implementation, the environment image is inputted into the target detection model, and target detection is performed on the environment image by using the target detection model, to determine whether the charging station is present in the environment image, resulting in higher efficiency of determining the charging station.

For example, the robot controller inputs the environment image into the target detection model, and feature extraction is performed on the environment image by using the target detection model, to obtain image features of the environment image. The robot controller uses the target detection model to slide a candidate detection box on the image features. During the sliding process, covered image areas are classified to obtain an area type of an image area corresponding to the candidate detection box. In a case where the area type of any image area is a preset type, the robot controller determines a candidate box covering the image area as the target detection box, wherein the preset type indicates the inclusive of the charging station. The robot controller determines that the charging station is present in the environment image, in a case where the target detection box is present. The robot controller determines that no charging station is present in the environment image, in a case where no target detection box is present.

In one possible implementation, the robot controller determines whether a cluster area of a preset color is present in the environment image, wherein the preset color corresponds to light with a preset wavelength that is emitted by the charging station. The robot controller determines that the charging station is present in the environment image, in a case where the cluster area of the preset color is present. The robot controller determines that no charging station is present in the environment image, in a case where no cluster area of the preset color is present.

The preset wavelength is a wavelength of light that propagates underwater for a longer distance. The preset wavelength is set by the technician according to actual situations, which is not limited in the embodiments of the present application. The charging station includes a light source assembly which is configured to emit the light with the preset wavelength.

In this implementation, whether the charging station is present in the environment image is determined by recognizing the cluster area of the preset color in the environment image, resulting in higher efficiency of determining the charging station.

For example, the robot controller determines pixel values of a plurality of pixels in the environment image. The robot controller determines that the cluster area of the preset color is present in the environment image, in a case where the plurality of pixels contain N adjacent pixels with pixel values being a preset pixel value, where the preset pixel value is configured to indicate the preset color, and N is a positive integer. The robot controller determines that no cluster area of the preset color is present in the environment image, in a case where the plurality of pixels do not contain N adjacent pixels with the pixel values being the preset pixel value. The robot controller determines that the charging station is present in the environment image, in a case where the cluster area of the preset color is present. The robot controller determines that no charging station is present in the environment image, in a case where no cluster area of the preset color is present.

N is set by the technician according to actual situations, which is not limited in the embodiments of this application.

In one possible implementation, the robot controller determines whether an area matched with a preset pattern template is present in the environment image, wherein the preset pattern template corresponds to a pattern on the charging station. The robot controller determines that the charging station is present in the environment image, in a case where the area matched with the preset pattern template is present in the environment image. The robot controller determines that no charging station is present in the environment image, in a case where no area matched with the preset pattern template is present in the environment image.

The preset pattern template corresponds to the pattern on the charging station, and the pattern on the charging station is set by the technician according to actual situations. In some embodiments, the pattern on the charging station may be formed by a light-emitting assembly on the charging station through light emitting or may be a sticker on the charging station, which is not limited in the embodiments of the present application.

In this implementation, whether the charging station is present in the environment image is determined by matching the environment image against the preset pattern template, resulting in higher efficiency of determining the charging station.

For example, the robot controller slides the preset pattern template in the environment image to determine whether the image area matched with the preset pattern template is present in the environment image. The robot controller determines that the charging station is present in the environment image, in a case where the image area matched with the preset pattern template is present in the environment image; and the robot controller determines that no charging station is present in the environment image, in a case where no image area matched with the preset pattern template is present in the environment image.

For example, the robot controller slides the preset pattern template in the environment image to determine similarities between the preset pattern template and the plurality of image areas in the environment image. The robot controller determines that the image area is matched with the preset pattern template and further determines that the charging station is present in the environment image, in a case where the plurality of image areas contain an image area whose similarity with the preset pattern template is greater than or equal to a preset similarity. The robot controller determines that the plurality of image areas are all not matched with the preset pattern template and further determines that no charging station is present in the environment image, in a case where the plurality of image areas contain no image area whose similarity with the preset pattern template is greater than or equal to the preset similarity.

B: The robot controller determines the target movement direction based on the position of the charging station in the environment image, in a case where the charging station is present in the environment image.

In one possible implementation, the robot controller determines relative positions between the charging station and a center point of the environment image, in a case where the charging station is present in the environment image. The robot controller determines the target movement direction based on the relative positions between the charging station and the center point of the environment image.

The center point of the environment image is directly in front of the pool cleaning robot, namely a forward direction of the pool cleaning robot. In a case where the pool cleaning robot includes a plurality of image acquisition assemblies, environment images acquired by the plurality of image acquisition assemblies are stitched to form the environment image, wherein the center point of the environment image is still directly in front of the pool cleaning robot.

In this implementation, the target movement direction is determined based on the relative positions between the charging station and the center point of the environment image, resulting in higher efficiency of determining the target movement direction.

For example, the robot controller determines a distance and a direction between the charging station and the center point of the environment image, in a case where the charging station is present in the environment image, wherein the direction between the charging station and the center point is a direction of a vector from the center point to the center point of the charging station, and correspondingly, the distance is a length of the vector. The robot controller converts the distance and the direction between the charging station and the center point of the environment image into the target movement direction, which is equivalent to converting a two-dimensional distance and direction in the environment image into a direction in the space where the pool cleaning robot is located. This is, the robot controller determines a direction deviation angle of the pool cleaning robot based on the distance and direction between the charging station and the center point of the environment image. The robot controller adds the forward direction of the pool cleaning robot to the direction deviation angle to obtain the target movement direction.

C: The robot controller controls the pool cleaning robot to rotate and reacquire an environment image, in a case where no charging station is present in the environment image.

In one possible implementation, the robot controller controls the pool cleaning robot to rotate in a preset direction and reacquire the environment image, in a case where no charging station is present in the environment image.

The preset direction is set by the technician according to actual situations, which is not limited in the embodiments of the present application.

D: The robot controller determines the target movement direction based on the reacquired environment image.

The manner of determining the target movement direction based on the reacquired environment image is of the same inventive concept as A and B mentioned above. For the implementation process, reference may be made to the above description. Details are not described herein.

The above explains the manner of determining the target movement direction based on the environment image, and the method for determining the target movement direction based on the signal is illustrated below.

In one possible implementation, the robot controller determines the target movement direction based on a signal parameter of the signal, wherein the signal parameter includes at least one of a signal reception moment and a signal strength.

Since the charging station periodically sends signals, the at least two signal reception units each have one signal reception moment during each signal transmission period of the charging station. The signal strength can reflect the distance between the pool cleaning robot and the charging station. A higher signal strength indicates a shorter distance between the pool cleaning robot and the charging station, and a lower signal strength indicates a longer distance between the pool cleaning robot and the charging station. In some embodiments, the signal is an acoustic signal, a wireless signal or a radio frequency signal, which is not limited in the embodiments of the present application.

In this implementation, the target movement direction is determined based on the signal parameter of the signal, resulting in higher accuracy of determining the target movement direction.

For example, the signal is an acoustic signal, the pool cleaning robot includes at least two signal reception units, and the robot controller determines the target movement direction based on a signal parameter of the acoustic signal.

In addition to charging the pool cleaning robot, the charging station can also emit the acoustic signal. In some embodiments, the charging station includes at least one signal transmitter unit configured to send the acoustic signal. The at least two signal reception units of the pool cleaning robot are configured to receive the acoustic signal sent by the charging station. The signal parameters of the acoustic signal received by the at least two signal reception units refer to the signal parameter of the acoustic signal when it is received by each of the at least two signal reception units. That is, in a case where the number of the at least two signal reception units is two, the number of the signal parameters is also two. In some embodiments, the signal parameter includes a time when each signal reception unit receives the acoustic signal and a signal strength of the acoustic signal received by each signal reception unit. Since the acoustic signal propagates underwater for a longer distance, the acoustic signal sent by the charging station enables to achieve the effect of remotely guiding the pool cleaning robot to return to the station. The charging station and the pool cleaning robot are both located underwater and located in the same space. The pool cleaning robot can move to the position where the charging station is located from the current position. In some embodiments, the charging station periodically sends the acoustic signals.

The above examples are illustrated below through several examples.

Example 1: The robot controller determines the target movement direction of the pool cleaning robot based on a time difference between the signal reception moments when the at least two signal reception units receive the acoustic signal.

Since the acoustic signal is periodically sent by the charging station, the signal reception moments can reflect distances between the signal reception units and the charging station. That is, for two signal reception units, when the signal reception moment of one of the signal reception units is earlier, the distance between the signal reception unit and the charging station is smaller than the distance between the other signal reception unit and the charging station.

In one possible implementation, the robot controller determines the target movement direction of the pool cleaning robot based on the time difference between the signal reception moments when the at least two signal reception units receive the acoustic signal and respective positions of the at least two signal reception units on the pool cleaning robot. Alternatively, the robot controller determines a direction corresponding to one signal reception unit, having an earlier signal reception moment in the at least two signal reception units, as the target movement direction, wherein the direction corresponding to the signal reception unit refers to a direction opposite to the direction in which the signal reception unit receives an ultrasonic signal.

Example 2: The robot controller determines the target movement direction of the pool cleaning robot based on a strength difference between the signal strengths of the acoustic signal received by the at least two signal reception units.

Since the acoustic signal is periodically sent by the charging station, the signal strength can reflect the distance between the signal reception unit and the charging station. That is, for two signal reception units, when one of the signal reception units has a higher signal strength, the distance between this signal reception units and the charging station is smaller than the distance between the other signal reception unit and the charging station.

In one possible implementation, the robot controller determines the target movement direction of the pool cleaning robot based on the strength difference between the signal strengths of the acoustic signal received by the at least two signal reception units and respective positions of the at least two signal reception units on the pool cleaning robot. Alternatively, the robot controller determines a direction corresponding to one signal reception unit, having a higher signal strength in the at least two signal reception units, as the target movement direction, wherein the direction corresponding to the signal reception unit refers to a direction opposite to the direction in which the signal reception unit receives the ultrasonic signal.

Example 3: The robot controller determines the target movement direction of the pool cleaning robot based on the time difference between the signal reception moments when the at least two signal reception units receive the acoustic signal and the strength difference between the signal strengths of the acoustic signal received by the at least two signal reception units.

In one possible implementation, the robot controller determines a first movement direction of the pool cleaning robot based on the time difference between the signal reception moments when the at least two signal reception units receive the acoustic signal. The robot controller determines a second movement direction of the pool cleaning robot based on the strength difference between the signal strengths of the acoustic signal received by the at least two signal reception units. The robot controller fuses the first movement direction and the second movement direction to obtain the target movement direction.

The manner of determining the first movement direction and the second movement direction is of the same inventive concept as implementations described in example 1 and example 2. For the implementation process, reference is made to descriptions in above Example 1 and Example 2. Details are not described herein. A method for fusing the first movement direction and the second movement direction is illustrated below.

In some embodiments, the robot controller performs weighted fusion on the first movement direction and the second movement direction by using first confidence and second confidence to obtain the target movement direction, wherein the first confidence is confidence corresponding to the signal reception moment, and the second confidence is confidence corresponding to the signal strength. The first confidence and the second confidence are set by the technician according to actual situations, and are not limited in the embodiments of the present application.

The above explains the manner of determining the target movement direction based on the signal, and the manner of determining the target movement direction based on the signal and the environment image is illustrated below.

In one possible implementation, the robot controller determines whether the charging station is present in the environment image. The robot controller determines the target movement direction based on the position of the charging station in the environment image and the signal parameter of the signal, in a case where the charging station is present in the environment image. The robot controller controls the pool cleaning robot to rotate and reacquire an environment image and a signal based on the signal parameter of the signal, in a case where no charging station is present in the environment image. The robot controller determines the target movement direction based on the reacquired environment image and the reacquired signal.

In this implementation, the target movement direction is determined through combination of the signal and the environment image, resulting in higher accuracy of the target movement direction.

To explain the above implementation more clearly, the above implementation is illustrated below through several parts.

Part 1: The robot controller determines whether the charging station is present in the environment image.

The manner, in which the robot controller determines whether the charging station is present in the environment image, is of the same inventive concept as the descriptions in the other implementations mentioned above. For the implementation process, reference may be made to the above related descriptions. Details are not described herein.

Part 2: The robot controller determines the target movement direction based on the position of the charging station in the environment image and the signal parameter of the signal, in a case where the charging station is present in the environment image.

In one possible implementation, the robot controller determines a third movement direction based on the position of the charging station in the environment image, in a case where the charging station is present in the environment image. The robot controller determines a fourth movement direction based on the signal parameter of the signal. The robot controller fuses the third movement direction and the fourth movement direction to obtain the target movement direction.

The manner of determining the third movement direction is of the same inventive concept as the manner of determining the target movement direction based on the position of the charging station in the environment image in the other implementations mentioned above, and the manner of determining the fourth movement direction based on the signal parameter of the signal is of the same inventive concept as the manner of determining the target movement direction based on the signal parameter of the signal in the other implementations mentioned above. For the implementation process, reference may be made to the descriptions in the other implementations mentioned above. Details are not described herein.

The method for fusing the third movement direction and the fourth movement direction is illustrated below.

In some embodiments, the robot controller performs weighed fusion on the third movement direction and the fourth movement direction by using third confidence and fourth confidence to obtain the target movement direction, wherein the third confidence is confidence corresponding to the signal reception moment, and the fourth confidence is confidence corresponding to the signal strength. The third confidence and the fourth confidence are set by the technician according to actual situations, and are not limited in the embodiments of the present application.

Part 3: The robot controller controls the pool cleaning robot to rotate and reacquire an environment image and a signal based on the signal parameter of the signal, in a case where no charging station is present in the environment image.

In one possible implementation, the robot controller determines a target rotation angle based on the signal parameter of the signal, in a case where no charging station is present in the environment image. The robot controller controls the pool cleaning robot to rotate by the target rotation angle. The robot controller controls the pool cleaning robot to reacquire the environment image and the signal, in a case where the pool cleaning robot completes the rotation by the target rotation angle.

Part 4: The robot controller determines the target movement direction based on the reacquired environment image and the reacquired signal.

The manner of redetermining the target movement direction is of the same inventive concept as the descriptions in the above several parts. For the implementation process, reference may be made to the descriptions in the above several parts. Details are not described herein.

The above implementation is described with an example where the pool cleaning robot is located at the pool bottom, and the case where the pool cleaning robot is located on the pool wall is illustrated below.

In one possible implementation, the robot controller acquires an environment image around the pool cleaning robot and/or a signal sent by the charging station, in a case where the pool cleaning robot is located on the pool wall; and the robot controller determines the target movement direction based on the environment image and/or the signal.

For example, the robot controller controls the pool cleaning robot to move towards the pool bottom, in a case where the pool cleaning robot is located on the pool wall and the signal parameter of the signal conforms to a preset parameter condition. The robot controller acquires the environment image around the pool cleaning robot and/or reacquires a signal sent by the charging station, in a case where the pool cleaning robot reaches the pool bottom. The robot controller determines the target movement direction based on the environment image and/or the reacquired signal.

The signal parameter conforms to the preset parameter condition, indicating that the distance between the pool cleaning robot and the charging station is too long, making it difficult for the pool cleaning robot to return to the station by using the signal. In this case, the pool cleaning robot is controlled to retreat to the pool bottom so as to acquire the environment image and/or reacquire the signal sent by the charging station, enabling an improved return-to-station accuracy.

For example, the signal parameter includes a signal strength, and that the signal parameter conforms to the preset parameter condition refers to that the signal strength is smaller than a first signal strength threshold or greater than a second signal strength threshold. The first signal strength threshold is greater than the second signal strength threshold, and the first signal strength threshold and the second signal strength threshold form a normal signal strength range. That the signal parameter conforms to the preset parameter condition also indicates that the signal strength is not within the normal signal strength range. The first signal strength threshold and the second signal strength threshold are set by the technician according to actual situations, and are not limited in the embodiments of the present application.

In this implementation, that the signal parameter of the signal conforms to the preset parameter condition also indicates that the signal strength is not within the normal signal strength range, indicating that the distance between the pool cleaning robot and the charging station is too long or too short. In this case, the pool cleaning robot automatically retreats to the pool bottom and re-searches for the signal and/or reacquire the environment image so as to ensure the return-to-station stability of the pool cleaning robot.

For another example, the signal parameter includes a signal reception moment, and that the signal parameter conforms to the preset parameter condition indicates that the time difference between the signal reception moments when at least two signal reception units of the pool cleaning robot receive the signal is greater than or equal to a time difference threshold, wherein a larger time difference indicates a longer distance between the pool cleaning robot and the charging station. That the signal parameter conforms to the preset parameter condition also indicates that the time difference between the signal reception moments is not within a normal time difference range. The time difference threshold is set by the technician according to actual situations. This is not limited in the embodiments of the present application.

For example, referring to FIG. 4, the robot controller controls the pool cleaning robot 101 to move towards the pool bottom, in a case where the signal parameter of the signal conforms to the preset parameter condition.

In one possible implementation, the robot controller determines the target movement direction based on the signal parameter of the signal, wherein the signal parameter includes at least one of the signal reception moment or the signal strength.

The implementation manner of the above implementation is of the same inventive concept as the descriptions in the other implementations mentioned above. For the implementation process, reference may be made to the descriptions in the other implementations mentioned above. Details are not described herein.

304: The robot controller controls the pool cleaning robot to return to the station based on the target movement direction.

Controlling the pool cleaning robot to return to the station includes controlling the pool cleaning robot to move towards the position where the charging station is located, and completing docking with the charging station. The charging station is located on the pool wall.

In one possible implementation, the robot controller controls the pool cleaning robot to move in the target movement direction, in a case where the pool cleaning robot is located at the pool bottom. The robot controller controls the pool cleaning robot to climb up the wall to dock with the charging station, in a case where the pool cleaning robot moves to a position below the charging station.

In this implementation, the pool cleaning robot is directly controlled to move in the target movement direction, in a case where the pool cleaning robot is located at the pool bottom, and the pool cleaning robot climbs up the wall to dock with the charging station, in a case where the pool cleaning robot moves to the position below the charging station, thereby enabling the pool cleaning robot to automatically return to the station.

To explain the above implementation more clearly, the above implementation is illustrated below through two parts.

Part 1: The robot controller controls the pool cleaning robot to move in the target movement direction, in a case where the pool cleaning robot is located at the pool bottom.

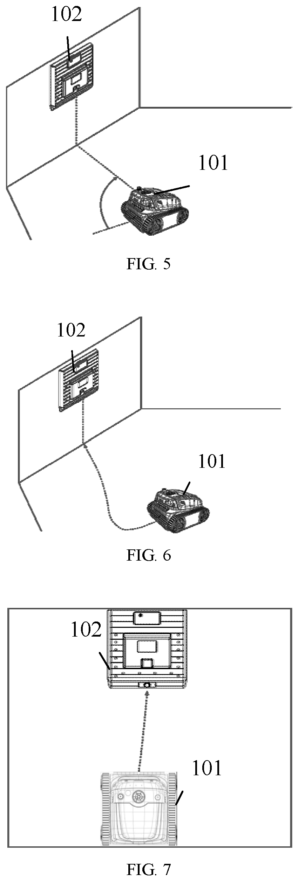

In one possible implementation, the robot controller controls the pool cleaning robot to turn in place so as to adjust a movement direction of the pool cleaning robot to the target movement direction, in a case where the pool cleaning robot is located at the pool bottom. The robot controller controls the pool cleaning robot to move in the target movement direction. For example, referring to FIG. 5, the robot controller controls the pool cleaning robot 101 to turn in place so as to adjust the movement direction of the pool cleaning robot to the target movement direction.

For example, the robot controller determines a directional deviation between a current orientation of the pool cleaning robot and the target movement direction. The robot controller controls the pool cleaning robot to rotate based on the directional deviation. The robot controller sends a driving instruction to a driving unit of the pool cleaning robot so as to drive the pool cleaning robot to move forward by the driving unit, in a case where the pool cleaning robot rotates to the target movement direction.

In one possible implementation, the robot controller controls the pool cleaning robot to move back and forth and turn so as to adjust the movement direction of the pool cleaning robot to the target movement direction, in a case where the pool cleaning robot is located at the pool bottom. The robot controller controls the pool cleaning robot to move in the target movement direction. For example, referring to FIG. 6, the robot controller controls the pool cleaning robot 101 to move back and forth and turn so as to adjust the movement direction of the pool cleaning robot 101 to the target movement direction.

For example, the robot controller determines the directional deviation between the current orientation of the pool cleaning robot and the target movement direction. The robot controller moves back and forth and controls the pool cleaning robot to rotate based on the directional deviation. The robot controller sends the driving instruction to the driving unit of the pool cleaning robot so as to make the driving unit stop driving the pool cleaning robot to turn and drive the pool cleaning robot to move forward, in a case where the pool cleaning robot rotates to the target movement direction.

In addition, during the process of controlling the pool cleaning robot by the robot controller to move in the target movement direction, the robot controller can adjust the movement direction of the pool cleaning robot by using the signal parameter of the signal and/or the acquired environment image, so that the pool cleaning robot can maintain the tendency to move towards the charging station.

Part 2: The robot controller controls the pool cleaning robot to climb up the wall to dock with the charging station, in a case where the pool cleaning robot move below the charging station.

Referring to FIG. 7, the robot controller controls the pool cleaning robot 101 to climb up the wall to dock with the charging station 102, in a case where the pool cleaning robot 101 moves to a position below the charging station 102.

In one possible implementation, the robot controller controls the pool cleaning robot to climb up the wall, in a case where the pool cleaning robot moves to the position below the charging station. The robot controller controls the pool cleaning robot to retreat downwards, in a case where the pool cleaning robot gets stuck while climbing up the wall. The robot controller controls the pool cleaning robot to adjust its posture and/or position and then climb up the wall again to dock with the charging station.

The pool cleaning robot may get stuck either by an obstacle on the pool wall or by a guiding disk of the charging station. This is not limited in the embodiments of the present application.

In this implementation, the pool cleaning robot can be controlled to automatically retreat and adjust the posture so as to complete docking with the charging station again, in a case where the pool cleaning robot moves to the position below the charging station. Therefore, the stability of the pool cleaning robot docking with the charging station is improved.

It is to be noted that the above is explained with an example where the pool cleaning robot is located at the pool bottom, and description is provided below with an example where the pool cleaning robot is located on the pool wall.

In one possible implementation, the robot controller controls the pool cleaning robot to return to the station based on a geometric relationship between the target movement direction and the pool wall where the pool cleaning robot is located, in a case where the pool cleaning robot is located on the pool wall.

The geometric relationship between the target movement direction and the pool wall where the pool cleaning robot is located refers to an included angle between the target movement direction and the pool wall where the pool cleaning robot is located.

In this implementation, the pool cleaning robot is controlled to return to the station by using the geometric relationship between the target movement direction and the pool wall where the pool cleaning robot is located, resulting in higher efficiency of returning to the station.

To explain the above implementation more clearly, the above implementation is illustrated below through two examples.

Example 1: The robot controller controls the pool cleaning robot to move in the target movement direction until the pool cleaning robot docks with the charging station, in a case where the included angle between the target movement direction and the pool wall where the pool cleaning robot is located is less than or equal to a preset included angle.

It is indicated that the charging station and the pool cleaning robot are located on the same pool wall, in a case where the included angle between the target movement direction and the pool wall where the pool cleaning robot is located is less than or equal to the preset included angle. In this case, docking with the charging station can be completed by directly controlling the pool cleaning robot to move in the target movement direction. The preset included angle is set by the technician according to actual situations, which is not limited in the embodiments of the present application.

Example 2: The robot controller controls the pool cleaning robot to move towards the pool bottom, in a case where the included angle between the target movement direction and the pool wall where the pool cleaning robot is located is greater than the preset included angle. The robot controller redetermines the target movement direction, in a case where the pool cleaning robot reaches the pool bottom. The robot controller controls the pool cleaning robot to return to the station based on the redetermined target movement direction.

It is indicated that the charging station and the pool cleaning robot are not located on the same pool wall, in a case where the included angle between the target movement direction and the pool wall where the pool cleaning robot is located is greater than the preset included angle. In this case, the pool cleaning robot retreats to the pool bottom and then returns to the station again, resulting in higher efficiency.

Optionally, step 305 or 306 below may also be performed after step 304.

305: The robot controller controls the pool cleaning robot to attach onto the pool wall near the charging station and sends a prompt signal to an associated terminal of the pool cleaning robot, in a case where the pool cleaning robot fails to complete returning to the station after a preset duration, wherein the prompt signal is configured to indicate retrieval of the pool cleaning robot near the charging station.

The preset duration is set by the technician according to actual situations, which is not limited in the embodiments of the present application.

Through step 305, the pool cleaning robot can be controlled to attach onto the pool wall and the prompt signal can be automatically sent to the associated terminal so as to prompt retrieval of the pool cleaning robot in a timely manner, in a case where the pool cleaning robot fails to complete returning to the station within a certain time. This reduces the difficulty of retrieving the pool cleaning robot.

306: The robot controller controls the pool cleaning robot to move to the pool bottom below the charging station and sends the prompt signal to the associated terminal of the pool cleaning robot, in a case where the pool cleaning robot fails to complete returning to the station after the preset duration.

Through step 306, the pool cleaning robot can be controlled to move to the pool bottom below the charging station and the prompt signal can be automatically sent to the associated terminal so as to prompt retrieval of the pool cleaning robot in a timely manner, in a case where the pool cleaning robot fails to complete returning to the station within a certain time. This reduces the difficulty of retrieving the pool cleaning robot.

All the optional technical solutions described above can be combined arbitrarily to form optional embodiments of the present application. Details are not described one by one herein.

Through the technical solutions provided by the embodiments of the present application, the position of the pool cleaning robot in the pool is determined, in response to the control instruction for the pool cleaning robot, wherein the position includes the pool bottom and the pool wall of the pool. The target movement direction is determined based on the position of the pool cleaning robot in the pool, wherein the target movement direction is the direction approaching the charging station. The pool cleaning robot is controlled to return to the station based on the target movement direction. This enables the pool cleaning robot to automatically return to the station from different positions in the pool, and improves the efficiency of charging the pool cleaning robot, thereby enhancing the intelligence level of the pool cleaning robot.

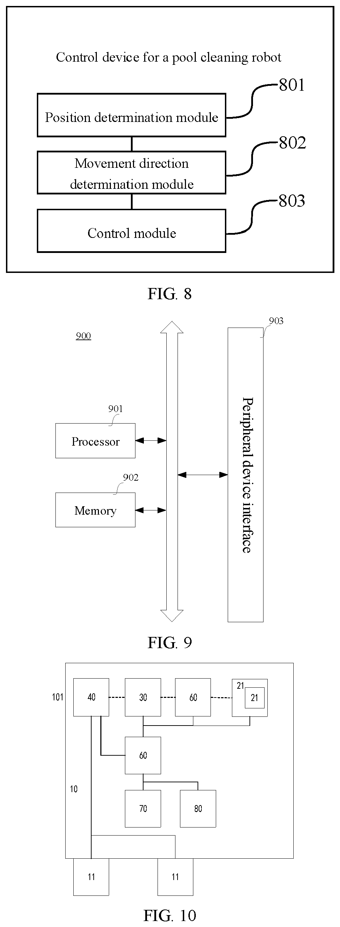

FIG. 8 is a schematic structural diagram of a control device for a pool cleaning robot according to an embodiment of the present application. Referring to FIG. 8, the device includes:
a signal acquisition module, configured to acquire a position or a direction signal related to the pool cleaning robot; and
a control module 803, configured to control the pool cleaning robot based on the position or the direction signal.

The signal acquisition module includes a position determination module 801 and a movement direction determination module 802.

In one possible implementation, the position determination module 801, the movement direction determination module 802 and the control module 803 are as follows.

The position determination module 801 is configured to determine a position of the pool cleaning robot in a pool, in response to a control instruction for the pool cleaning robot, where the position includes a pool bottom and a pool wall of the pool.

The movement direction determination module 802 is configured to determine a target movement direction based on the position of the pool cleaning robot in the pool, where the target movement direction is a direction approaching a charging station.

The control module 803 is configured to control the pool cleaning robot to return to the station based on the target movement direction.

In one possible implementation, the position determination module 801 is configured to determine a posture of the pool cleaning robot, in response to the control instruction for the pool cleaning robot; and determine the position of the pool cleaning robot in the pool based on the posture of the pool cleaning robot.

In one possible implementation, the movement direction determination module 802 is configured to acquire an environment image around the pool cleaning robot and/or a signal sent by the charging station, in a case where the pool cleaning robot is located at the pool bottom; determine the target movement direction based on the environment image and/or the signal; and/or acquire the environment image around the pool cleaning robot and/or the signal sent by the charging station, in a case where the pool cleaning robot is located on the pool wall; and determine the target movement direction based on the environment image and/or the signal.

In one possible implementation, the movement direction determination module 802 is configured to determine whether the charging station is present in the environment image; determine the target movement direction based on a position of the charging station in the environment image, in a case where the charging station is present in the environment image; control the pool cleaning robot to rotate and reacquire an environment image, in a case where no charging station is present in the environment image; and determine the target movement direction based on the reacquired environment image; or
determine the target movement direction based on a signal parameter of the signal, where the signal parameter includes at least one of a signal reception moment and a signal strength; or
determine whether the charging station is present in the environment image; determine the target movement direction based on the position of the charging station in the environment image and the signal parameter of the signal, in a case where the charging station is present in the environment image; control the pool cleaning robot to rotate and reacquire an environment image and a signal based on the signal parameter of the signal, in a case where no charging station is present in the environment image; and determine the target movement direction based on the reacquired environment image and the reacquired signal.

In one possible implementation, the signal is an acoustic signal. The pool cleaning robot includes at least two signal reception units. The movement direction determination module 802 is configured to determine a target movement direction of the pool cleaning robot based on a time difference between the signal reception moments when the at least two signal reception units receive the acoustic signal; or determine the target movement direction of the pool cleaning robot based on a strength difference between the signal strengths of the acoustic signal received by the at least two signal reception units; or determine the target movement direction of the pool cleaning robot based on the time difference between the signal reception moments when the at least two signal reception units receive the acoustic signal, and the strength difference between the signal strengths of the acoustic signal received by the at least two signal reception units.

In one possible implementation, the movement direction determination module 802 is configured to input the environment image into a target detection model, perform target detection on the environment image through the target detection model to determine whether a target detection box is present in the environment image, where the target detection box is configured to indicate the position of the charging station; determine that the charging station is present in the environment image, in a case where the target detection box is present in the environment image; and determine that no charging station is present in the environment image, in a case where no target detection box is present in the environment image; or
determine whether a cluster area of a preset color is present in the environment image, where the preset color corresponds to light with a preset wavelength that is emitted by the charging station; determine that the charging station is present in the environment image, in a case where the cluster area of the preset color is present; and determine that no charging station is present in the environment image, in a case where no cluster area of the preset color is present; or
determine whether an area matched with a preset pattern template is present in the environment image, where the preset pattern template corresponds to a pattern on the charging station; determine that the charging station is present in the environment image, in a case where the area matched with the preset pattern template is present in the environment image; and determine that no charging station is present in the environment image, in a case where no area matched with the preset pattern template is present in the environment image.

In one possible implementation, the movement direction determination module 802 is configured to control the pool cleaning robot to move towards the pool bottom, in a case where the pool cleaning robot is located on the pool wall and the signal parameter of the signal conforms to a preset parameter condition; acquire the environment image around the pool cleaning robot and/or reacquire a signal sent by the charging station, in a case where the pool cleaning robot reaches the pool bottom; and determine the target movement direction based on the environment image and/or the reacquired signal.

In one possible implementation, the charging station is located on the pool wall. The control module 803 is configured to control the pool cleaning robot to move in the target movement direction, in a case where the pool cleaning robot is located at the pool bottom; control the pool cleaning robot to climb up the wall to dock with the charging station, in a case where the pool cleaning robot moves to a position below the charging station; and/or control the pool cleaning robot to return to the station based on a geometric relationship between the target movement direction and the pool wall where the pool cleaning robot is located, in a case where the pool cleaning robot is located on the pool wall.

In one possible implementation, the control module 803 is configured to control the pool cleaning robot to move in the target movement direction until the pool cleaning robot docks with the charging station, in a case where an included angle between the target movement direction and the pool wall where the pool cleaning robot is located is less than or equal to a preset included angle; control the pool cleaning robot to move towards the pool bottom, in a case where the included angle between the target movement direction and the pool wall where the pool cleaning robot is located is greater than the preset included angle; redetermine the target movement direction, in a case where the pool cleaning robot reaches the pool bottom; and control the pool cleaning robot to return to the station based on the redetermined target movement direction.

In one possible implementation, the control module 803 is configured to control the pool cleaning robot to climb up the wall, in a case where the pool cleaning robot moves to the position below the charging station; control the pool cleaning robot to retreat downwards, in a case where the pool cleaning robot gets stuck while climbing up the wall; and control the pool cleaning robot to adjust its posture and/or position and then climb up the wall again to dock with the charging station.

In one possible implementation, the control module 803 is further configured to control the pool cleaning robot to attach onto the pool wall near the charging station and send a prompt signal to an associated terminal of the pool cleaning robot, in a case where the pool cleaning robot fails to complete returning to the station after a preset duration, where the prompt signal is configured to prompt retrieval of the pool cleaning robot near the charging station; or control the pool cleaning robot to move to the pool bottom below the charging station and send the prompt signal to the associated terminal of the pool cleaning robot, in a case where the pool cleaning robot fails to complete returning to the station after the preset duration.

In one possible implementation, the device further includes an avoidance module, which is configured to acquire a collision signal sent by the charging station, in a case where the pool cleaning robot performs a cleaning operation on the pool wall, where the collision signal is configured to indicate a distance between the pool cleaning robot and the charging station; and control the pool cleaning robot to avoid the charging station based on the collision signal.

It is to be noted that the control device for a pool cleaning robot provided by the above embodiment is illustrated with the division of functional modules when controlling the pool cleaning robot to return to the station. In practical applications, the functions can be assigned to different functional modules as needed for completion. That is, the internal structure of the robot controller is divided into different function modules to complete all or part of the functions described above. In addition, the control device for a pool cleaning robot provided by the above embodiment is of the same inventive concept as the embodiment of the control method for a pool cleaning robot. For the specific implementation process, reference may be made to the method embodiments for details. Details are not described herein.

Through the technical solutions provided by the embodiments of the present application, the position of the pool cleaning robot in the pool is determined, in response to the control instruction for the pool cleaning robot, where the position includes the pool bottom and the pool wall. The target movement direction is determined based on the position of the pool cleaning robot in the pool, where the target movement direction is the direction approaching the charging station. The pool cleaning robot is controlled to return to the station based on the target movement direction. This enables the pool cleaning robot to automatically return to the station from different positions in the pool, and improves the efficiency of charging the pool cleaning robot, thereby enhancing the intelligence level of the pool cleaning robot.

Embodiments of the present application further provide a pool cleaning robot. FIG. 9 is a schematic structural diagram of a robot controller according to an embodiment of the present application. Generally, the pool cleaning robot includes a robot controller 900. The robot controller includes one or more processors 901 and one or more memories 902.

The processor 901 may include one or more processing cores, such as a 4-core processor and an 8-core processor. The processor 901 may be implemented by using at least one of digital signal processing (DSP), a field-programmable gate array (FPGA) and a programmable logic array (PLA). The processor 901 may further include a main processor and a coprocessor, where the main processor is a processor configured to process data in an awake state and is also referred to as a central processing unit (CPU), while the coprocessor is a low-power processor configured to process data in a standby state. In some embodiments, the processor 901 may be integrated with a graphics processing unit (GPU), and the GPU is responsible for rendering and drawing content that a display screen needs to display. In some embodiments, the processor 901 may include an artificial intelligence (AI) processor, and the AI processor is configured to perform a computational operation related to machine learning.

The memory 902 may include one or more computer-readable storage media which may be non-transitory. The memory 902 may further include a high-speed random access memory and a non-volatile memory, such as one or more disk storage devices and a flash storage device. In some embodiments, the non-transitory computer-readable storage medium in the memory 902 is configured to store at least one computer program which is executed by the processor 901 to implement the control method for a pool cleaning robot according to the method embodiments of the present application.

In some embodiments, the pool cleaning robot 900 further optionally includes a peripheral device interface 903 and at least one peripheral device. The processor 901, the memory 902 and the peripheral device 903 may be connected via a bus or a signal line. Each peripheral device may be connected to the peripheral device interface 903 via a bus, a signal line or a circuit board.

A person skilled in the art can understand that the structure shown in FIG. 9 is not intended to limit the pool cleaning robot 900 and may include more or fewer components than those illustrated in the drawings, or be combined with some assemblies, or use different assembly arrangements.

In an exemplary embodiment, a computer-readable storage medium is further provided, such as a memory including a computer program. The above computer program can be executed by a processor to complete the control method for a pool cleaning robot as described in the above embodiments. For example, the computer-readable storage medium may be a read-only memory (ROM), a random access memory (RAM), a compact disc read-only memory (CD-ROM), a magnetic tape, a floppy disk, an optical data storage device, or the like.

In an exemplary embodiment, a computer program product or a computer program is further provided. The computer program product or the computer program includes program code stored in a computer-readable storage medium. The processor of the robot controller reads the program code from the computer-readable storage medium and executes the program code, enabling the robot controller to perform the above control method for a pool cleaning robot.

In some embodiments, the computer program involved in the embodiments of the present application may be deployed on one robot controller for execution, or executed on a plurality of robot controllers located at one place, or executed on a plurality of robot controllers distributed at a plurality of places and interconnected via a communication network. The plurality of robot controllers distributed at the plurality of places and interconnected via the communication network may form a blockchain system.

Those of ordinary skills in the art can understand all or part of the steps of the above embodiments may be implemented by using hardware, or by instructing relevant hardware through a program. The program may be stored in a computer-readable storage medium, and the storage medium mentioned above may be a read-only memory, a magnetic disk, an optical disc, or the like.

A pool cleaning robot 101 according to an embodiment of the present application is described below with reference to the accompanying drawings.

The pool cleaning robot 101 according to the embodiment of the present application includes a signal acquisition assembly 20, configured to acquire a position or a direction signal related to the pool cleaning robot; and a robot controller 40, configured to control the pool cleaning robot based on the position or the direction signal.

As shown in FIG. 10 to FIG. 17, the pool cleaning robot 101 according to the embodiment of the present application includes a robot body 10, a filtering unit, walking units 11, a robot controller 40 and a signal acquisition assembly 20.

The robot body 10 is provided with at least one water inlet and at least one water outlet. The filtering unit is configured to filter a liquid entering through the water inlet, wherein the filtered liquid is discharged through the water outlet. The walking units 11 are configured to contact with a submerged surface in a pool and are rotatable relative to the robot body 10. The robot controller 40 is arranged on the robot body 10 and controls the pool cleaning robot 101. The signal acquisition assembly 20 is arranged on the robot body 10 and communicates with the robot controller 40. The signal acquisition assembly 20 can acquire signals from at least two positions on the robot body 20, and the signals are configured to provide information about the position or a direction of the pool cleaning robot. In some embodiments, the signals are acoustic signals or sound signals, and correspondingly, the signal acquisition assembly 20 is a sound acquisition assembly. In addition, the sound signals are configured to guide the pool cleaning robot to move towards a preset position, wherein the preset position includes a charging position or a retrieving position, and the charging position typically refers to the position where the charging station is located.

In the pool cleaning robot according to the embodiment of the present application, the sound acquisition assembly is arranged on the robot body, so that a sound signal can be acquired and can be converted into an electrical signal, which is then transmitted to the robot controller. The robot controller controls the pool cleaning robot according to the electrical signal from the sound acquisition assembly, enabling sound control. Moreover, the sound acquisition assembly can acquire sound signals from different positions. By determining different parameters of the sound signals acquired from different positions, the current position of the pool cleaning robot can be determined. This makes it more convenient for the pool cleaning robot to move toward a specific position, results in a strong ability to perceive the sound signal, which significantly increases the probability of successfully moving to the specific position.

In some possible implementations, the filtering unit may be a filter and may be detachably installed on the robot body 10. The liquid in the pool may enter the filtering unit through the water inlet and then is filtered by the filtering unit, so that dirt in the liquid remains in the filtering unit. The filtered liquid flows to the water outlet from the filtering unit and flows back to the pool through the water outlet.

For example, the walking units 11 may be structures such as tracks, brushes, rollers or mechanical legs, or other structures enabling the pool cleaning robot 101 to move on the pool bottom. In addition, a signal processing unit 90 may be arranged between the robot controller 40 and the signal acquisition assembly 20. The electrical signal from the signal acquisition assembly 20 is first processed by the signal processing unit 90 and then transmitted to the robot controller 40. This can filter out an interference signal, preventing cluttered noise and resulting in higher control reliability.

According to the pool cleaning robot 101 provided by the embodiment of the present application, the signal acquisition assembly 20 is arranged on the robot body 10, so that the signal acquisition assembly 20 can receive a sound signal, convert the sound signal into an electrical signal, and then transmit the electric signal to the robot controller 40. The robot controller 40 can control parameters such as a movement direction, an operating state and operating power of the pool cleaning robot 101 according to the electrical signal fed back by the signal acquisition assembly 20, enabling sound control over the pool cleaning robot 101. The signal acquisition assembly 20 may be an ultrasonic receiver. The sound signal propagates in water for a longer distance, for example, ultrasonic propagation may reach hundreds of meters, resulting in a higher ability of the pool cleaning robot 101 to receive the signal. This helps achieve long-distance and wide-range control, thereby significantly improving the control flexibility.

Furthermore, the signal acquisition assembly 20 can acquire signals from at least two positions on the robot body 10. For example, the robot controller 40 can acquire a time when a signal generation device 50 emits sound, and a time when the signal acquisition assembly 20 acquires sound from each position. Since the position of the signal generation device 50 can be determined, a distance between each position and the signal generation device 50 can be determined by using the time when the signal acquisition assembly 20 acquires the sound from this position, so that relative positions between the pool cleaning robot 101 and the signal generation device 50 are determined. In some embodiments, the signal generation device 50 is also referred to as a sound source. Alternatively, the robot controller 40 may acquire volume of the sound acquired by the signal acquisition assembly 20 from each position. Since the position of the signal generation device 50 can be determined, the distance between each position and the signal generation device 50 can be determined based on the volume of the sound acquired by the signal acquisition assembly 20 from this position, so that the relative positions between the pool cleaning robot 101 and the signal generation device 50 are determined. In some embodiments, the signal generation device 50 belongs to a charging station.

The robot controller 40 can control the pool cleaning robot 101 to return to a specific position according to the relative positions between the pool cleaning robot 101 and the signal generation device 50. For example, the pool cleaning robot 101 is controlled to move to the position where the charging station is located, or to a retrieving position. In this way, the pool cleaning robot 101 has a strong ability to perceive the sound signal, thereby greatly increasing the probability of successfully moving to the specific position, and facilitating charging and retrieving. In addition, the pool cleaning robot 101 is not limited by the surface level of the liquid and has a higher degree of automation.

Therefore, the pool cleaning robot 101 provided by the embodiments of the present application not only can achieve sound control, but also has a strong ability to perceive the sound signal, thereby significantly increasing the probability of successfully moving to the specific position.

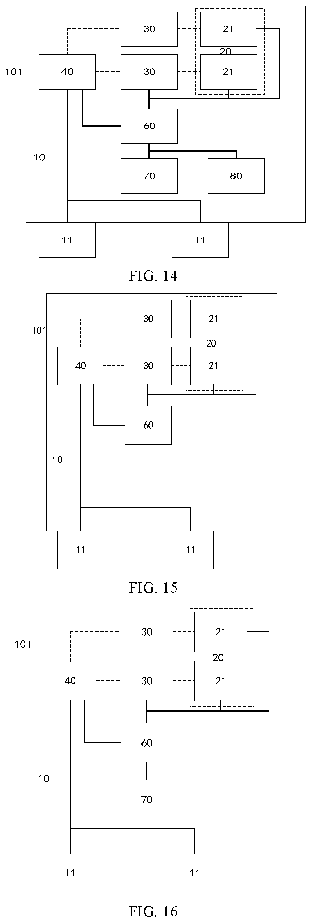

As shown in FIG. 14 to FIG. 17, the above signal acquisition assembly 20 includes at least two signal reception units 21 which are arranged at different positions on the robot body 10.

For example, the signal acquisition assembly 20 includes a first signal reception unit and a second signal reception unit. The first signal reception unit and the second signal reception unit may be located at the same side or different sides of the robot body 10. After the signal generation device 50 emits a signal, the first signal reception unit and the second signal reception unit receive the signal. The robot controller 40 can determine a first distance between the signal generation device 50 and the first signal reception unit based on a time when the signal generation device 50 emits the signal and a time when the first signal reception unit receives the signal. The robot controller can determine a second distance between the signal generation device 50 and the second signal reception unit based on the time when the signal generation device 50 emits the signal and a time when the second signal reception unit receives the signal.

Since the position of the signal generation device 50 is determined, the controller can determine an angle by which the pool cleaning robot 101 needs to rotate and its travel direction according to the first distance, the second distance and the position of the signal generation device 50, so that the pool cleaning robot 101 can move to a target area.

In one possible implementation, the pool cleaning robot 101 has a central section, vertical planes where the walking units 11 at two sides of the robot body 10 are located are defined as a first plane and a second plane. The central section, the first plane and the second plane are parallel to each other, and the central section is located centrally between the first plane and the second plane.

When at least two signal reception units 21 are provided, vertical planes where the at least two signal reception units 21 are located are respectively arranged at two sides of the central section, and the vertical planes where the signal reception units 21 are located, the first plane and the second plane are parallel to each other.

For example, the above pool cleaning robot 101 has a preset direction. The preset direction, the movement direction and the height direction of the pool cleaning robot 101 are perpendicular to each other. The at least two signal reception units 21 are respectively arranged at two opposite sides of the robot body 10 in the preset direction.

Therefore, when the signal generation device 50 is located directly in front of the pool cleaning robot 101, sound parameters (such as a time and volume) acquired by the signal reception units 21 should be the same or approximately the same, thereby eliminating interference, and improving the probability of successfully moving to the specific position.

As shown in FIG. 10 to FIG. 13, the above signal acquisition assembly 20 includes one signal reception unit 21 which is movable relative to the robot body 10.

For example, the robot body 10 is provided with a sliding rail, and the signal reception unit 21 is slidably installed on the sliding rail. Alternatively, the robot body 10 is connected to a rotating arm, the rotating arm is rotatably installed on the robot body 10. The signal reception unit 21 is connected to the rotating arm, and when the rotating arm rotates relative to the robot body 10, the signal reception unit 21 moves relative to the robot body 10. Alternatively, the robot body is connected to a telescopic arm having a function of extension and retraction, the signal reception unit 21 is connected to the telescopic arm, and the distance between the robot body 10 and the signal reception unit 21 is shorter when the telescopic arm retracts and is longer when the telescopic arm extends.

In other words, after the signal generation device 50 emits a signal, the signal reception unit 21 receives the signal when at a first position, and the robot controller 40 can determine a first distance between the signal generation device 50 and the first position according to the time when the signal generation device 50 emits the signal and the time when the signal reception unit 21 receives the signal at the first position; and the signal reception unit 21 also receives the signal when at a second position, and the robot controller 40 can determine a second distance between the signal generation device 50 and the second position according to the time when the signal generation device 50 emits the signal and the time when the signal reception unit 21 receives the signal at the second position, where the first position and the second positions are different positions.

Since the position of the signal generation device 50 is determined, the controller can determine an angle by which the pool cleaning robot 101 needs to rotate and its travel direction according to the first distance, the second distance and the position of the signal generation device 50, so that the pool cleaning robot 101 can move to a target area. In some embodiments, the target area is an area where the charging station is located.

In one possible implementation, the pool cleaning robot 101 has a central section, vertical planes where the walking units 11 at two sides of the robot body 10 are located are defined as a first plane and a second plane. The central section, the first plane and the second plane are parallel to each other, and the central section is located centrally between the first plane and the second plane.

When one signal reception unit 21 is provided, a vertical plane where the first position is located and a vertical plane where the second position is located are respectively arranged at two sides of the central section. The vertical plane where the first position is located, the vertical plane where the second position is located, the first plane and the second plane are parallel to each other.

For example, the above pool cleaning robot 101 has a preset direction. The preset direction, the movement direction and the height direction of the pool cleaning robot 101 are perpendicular to each other, and the first position and the second position are respectively arranged at two opposite sides of the robot body 10 in the preset direction.

Therefore, when the signal generation device 50 is located directly in front of the pool cleaning robot 101, sound parameters (such as a time and volume) acquired by the signal reception units 21 should be the same or approximately the same, thereby eliminating interference, and improving the probability of successfully moving to the specific position.

As shown in FIG. 10 to FIG. 17, the above pool cleaning robot 101 further includes an amplification unit 30, wherein the amplification unit 30 communicates with the robot controller 40 and the signal reception unit 21 and is configured to amplify the signal received by the signal reception unit 21 and then transmit the amplified signal to the robot controller 40. By arranging the amplification unit 30, the signal reception unit 21 converts a sound signal into an electrical signal and transmits the electrical signal to the amplification unit 30, and then the robot controller 40 receives the electrical signal amplified by the amplification unit 30, thereby reducing the attenuation of the sound signal during transmission, improving the reliability of receiving the signal by the robot controller, and optimizing the control effect.

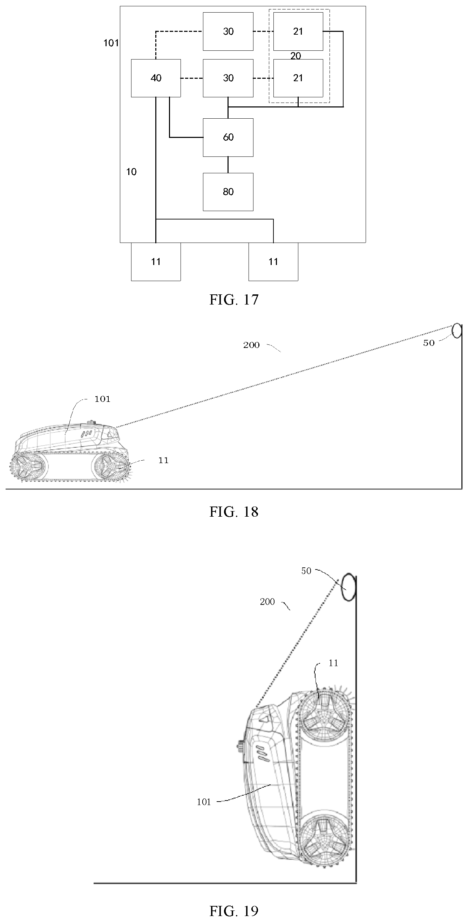

As shown in FIG. 18 and FIG. 19, the above signal reception unit 21 is arranged at one side of the robot body 10 in the movement direction. During the movement of the pool cleaning robot 101, the side of the robot body 10 provided with the signal reception unit 21 in its movement direction can always face the signal generation device 50, to reduce the probability of an obstacle existing between the signal reception unit 21 and the signal generation device 50. This reduces the attenuation and reflection of the sound emitted by the signal generation device 50 during transmission to the signal reception unit 21, and also reduces the impact caused by multipath effects. As a result, the effectiveness of the sound signal received by the signal reception unit 21 can be enhanced, and the forward direction and the rotation direction of the pool cleaning robot 101 are more reliable and accurate.

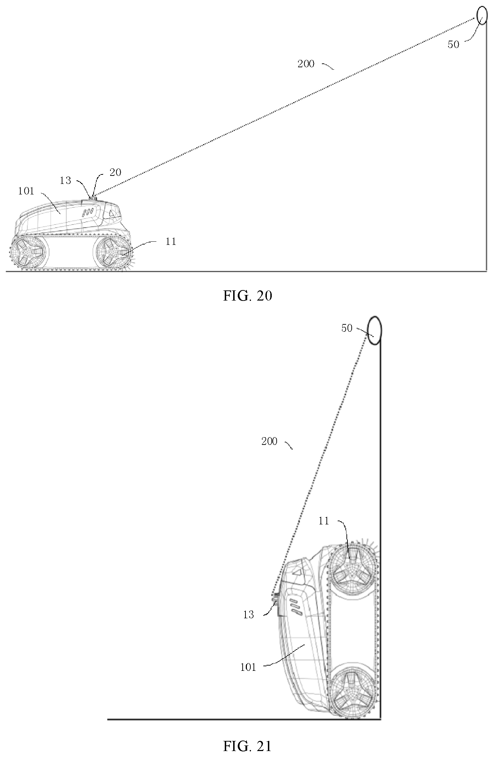

As shown in FIG. 20 and FIG. 21, an installation protrusion 13 is arranged on an upper surface of the above robot body 10, and the signal reception unit 21 is arranged on the installation protrusion 13 of the robot body 10.

The signal reception unit 21 is arranged on the upper surface of the robot body 10, so that the probability of the obstacle existing between the signal reception unit 21 and the signal generation device 50 is low when the pool cleaning robot 101 moves on the pool bottom. Moreover, since the installation protrusion 13 is arranged on the upper surface of the robot body 10, the height of the signal reception unit 21 installed on the installation protrusion 13 is higher than the upper surface of the robot body 10, correspondingly reducing the probability of the obstacle existing between the signal reception unit 21 and the signal generation device 50 when the pool cleaning robot 101 moves on the pool wall. This reduces the attenuation and reflection of the sound emitted by the signal generation device 50 during transmission to the signal reception unit 21, and also reduces the impact caused by multipath effects. As a result, the effectiveness of the sound signal received by the signal reception unit 21 can be enhanced, and the forward direction and the rotation direction of the pool cleaning robot 101 are more reliable and accurate.

Therefore, no matter whether the pool cleaning robot 101 moves on the pool bottom or on the pool wall, the attenuation and reflection of the sound emitted by the signal generation device 50 during transmission of the sound to the signal reception unit 21, and the impact caused by multipath effects are reduced. As a result, the effectiveness of the sound signal received by the signal reception unit 21 can be enhanced, and the forward direction and the rotation direction of the pool cleaning robot 101 are more reliable and accurate.

For example, the installation protrusion 13 may be arranged at one side of the pool cleaning robot 101 close to the signal generation device 50 in the movement direction of the pool cleaning robot.

As shown in FIG. 18 to FIG. 21, a distance between the signal reception unit 21 and the bottom surface of the robot body 10 in the height direction of the pool cleaning robot 101 is not less than 4cm. Therefore, the signal reception unit 21 is closer to the upper surface of the robot body 10. On one hand, a sufficient distance for assembly and disassembly is maintained between the signal reception unit 21 and the bottom surface of the robot body 10, thereby facilitating the assembly and disassembly of the signal reception unit 21. On the other hand, no matter whether the pool cleaning robot 101 moves on the pool bottom or on the pool wall, an obstacle exists between the signal reception unit 21 and the signal generation device 50 for a shorter time at a smaller probability, thereby further reducing the impact caused by multipath effects. As a result, the effectiveness of the sound signal received by the signal reception unit 21 can be enhanced, and the forward direction and the rotation direction of the pool cleaning robot 101 are more reliable and accurate.

As shown in FIG. 10 to FIG. 17, the above pool cleaning robot 101 further includes a posture detection unit and a suction unit 12.

The posture detection unit is arranged on the robot body 10 and communicates with the robot controller 40. The robot controller 40 acquires a movement destination of the pool cleaning robot 101 according to the signals from the signal acquisition assembly 20, and controls the movement direction of the pool cleaning robot 101 according to the posture detection unit. The suction unit 12 is arranged on the robot body 10 and communicates with the robot controller 40, and the robot controller 40 controls power of the suction unit 12 according to a signal from the posture detection unit.

For example, the posture detection unit may include at least one of an accelerometer and a gyroscope. The posture detection unit can detect the movement direction of the pool cleaning robot 101 and an included angle between the pool cleaning robot 101 and a vertical direction. The robot controller 40 can determine whether the movement direction of the pool cleaning robot 101 allows the pool cleaning robot to reach a target area according to an electrical signal fed back by the posture detection unit, thereby adjusting the movement direction and the rotation angle of the pool cleaning robot 101.

In addition, an opening direction of the water outlet faces upward. The suction unit 12 is activated to guide the liquid in the pool to flow into the filtering unit from the water inlet, and then flow to the water outlet from the filtering unit. As the liquid flowing out of the water outlet moves upwards, a downward pressure can be provided for the pool cleaning robot 101, thereby ensuring that the pool cleaning robot 101 is in close contact with the pool bottom.

When the pool cleaning robot 101 moves to a corner between the pool bottom and the pool wall, the power of the suction unit 12 can be reduced to decrease the downward pressure on the pool cleaning robot 101, thereby facilitating the movement of the pool cleaning robot 101 to the pool wall from the pool bottom. After the pool cleaning robot 101 fully reaches the pool wall, the power of the suction unit 12 can be increased to increase the downward pressure on the pool cleaning robot 101, so that the pool cleaning robot 101 is closely attached onto the pool wall, thereby preventing the pool cleaning robot 101 from detaching from the pool wall under the action of gravity.

The above signal reception unit 21 includes at least one of a sound sensor and a microphone. In other words, the signal reception unit 21 may include the sound sensor, or may include the microphone. Alternatively, the signal reception unit 21 includes the sound sensor and the microphone, where the sound sensor may be an ultrasonic sensor. In this way, the signal reception unit 21 is arranged in a more diverse manner, which can enhance the versatility of the pool cleaning robot 101 and meet different use scenarios and use needs.

As shown in FIG. 10 to FIG. 17, the above pool cleaning robot 101 further includes a power storage module 60 and at least one of a wireless charging module 70 and a wired charging module 80.

The power storage module 60 is arranged on the robot body 10 and connected to the signal acquisition assembly 20, the wireless charging module 70 is arranged at the bottom of the robot body 10 and connected to the power storage module 60, and the wired charging module 80 is arranged at the bottom of the robot body 10 and connected to the power storage module 60. The wired charging module includes a corrosion-resistant electrode plate.

Therefore, the pool cleaning robot 101 can supply power to the signal acquisition assembly 20 through the power storage module 60, and enables both wireless charging through the wireless charging module 70 and wired charging through the wired charging module 80. Since the wired charging module 80 includes the corrosion-resistant electrode plate which can be used underwater, charging underwater can be achieved no matter whether the wireless charging module 70 or the wired charging module 80 is adopted.

In other words, the pool cleaning robot 101 can achieve both wireless charging and wired charging, and be charged in different charging manners. Moreover, charging underwater can also be achieved, without being restricted by charging locations. This greatly improves the charging convenience and timeliness.

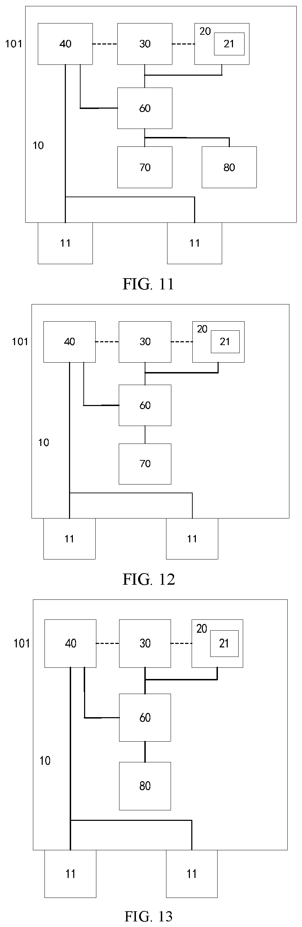

As shown in FIG. 11 to FIG. 13 and FIG. 15 to FIG. 17, at least one of the power storage module 60, the wireless charging module 70 and the wired charging module 80 mentioned above is detachably connected to the robot body 10. When the power storage module 60 may be detachably connected to the robot body 10, the power storage module 60 can be charged outside the robot body 10. A plurality of power storage modules 60 may be provided, and then the power storage modules 60 may be replaced with each other. This enables the pool cleaning robot 101 to operate almost continuously, thereby extending the operating duration. When the wireless charging module 70 may be detachably connected to the robot body 10, the wireless charging module 70 may serve as an optional plug-in, which can be omitted from purchase if no wireless charging condition is supported at a user's home or the user does not need a wireless charging mode. The pool cleaning robot 101 is charged in a wired charging manner or the power storage module 60 is replaced, thereby reducing use costs for the user and resulting in higher flexibility. When the wired charging module 80 may be detachably connected to the robot body 10, the wireless charging module may serve as an optional plug-in, and the pool cleaning robot 101 is charged in a wireless charging manner or the power storage module 60 is replaced. The wired charging module 80 can be omitted from purchase if no wired charging condition is supported at the user's home or the user does not need the wired charging mode, thereby reducing use costs for the user and resulting in higher flexibility.

A pool cleaning system 200 according to an embodiment of the present application is described below with reference to the accompanying drawings.

As shown in FIG. 18 to FIG. 21, the pool cleaning system 200 according to the embodiment of the present application includes the pool cleaning robot 101 according to the above embodiment of the present application.

In the pool cleaning system 200 according to the embodiment of the present application, the pool cleaning robot 101 according to the embodiment of the present application is used, so that sound control can be achieved, and the pool cleaning robot has a strong ability to perceive the sound signal, thereby significantly improving the probability of successfully moving to the specific position.

As shown in FIG. 18 to FIG. 21, the above pool cleaning system 200 further includes a signal generation device 50 configured to emit a signal. When a signal acquisition assembly 20 acquires the signal, a robot controller 40 controls the pool cleaning robot 101 to move towards a preset position.

During the movement of the pool cleaning robot 101 towards the preset position, a total movement distance of the pool cleaning robot 101 is L1, a movement distance of the pool cleaning robot 101 when a connecting line between the signal generation device 50 and the signal acquisition assembly 20 passes through the robot body 10 is L2, and L2/L1 is less than 50%.

Therefore, during the movement of the pool cleaning robot 101, for more than half of the distance, the signal generation device 50 and the signal acquisition assembly 20 cannot be blocked by the robot body 10. This is beneficial for optimizing the signal quality of the sound signal transmitted between the sound sensor and the signal generation device 50 when the robot returns to a base station, thereby improving the perception quality, and increasing the probability of the pool cleaning robot successfully returning to the base station.

The other components and operations of the pool cleaning robot 101 and the pool cleaning system 200 with the same according to the embodiments of the present application are known to those of ordinary skills in the art and are not described in detail herein.

The above are merely optional embodiments of the present application and are not intended to limit the present application. Any modifications, equivalent substitutions, improvements, and the like made within the spirit and principle of the present application shall all fall within the protection scope of the present application.

## Claims

1. A control method for a pool cleaning robot, wherein the method comprises:
acquiring a position or a direction signal related to the pool cleaning robot; and
controlling the pool cleaning robot based on the position or the direction signal.

2. The method according to claim 1, wherein acquiring the position or the direction signal related to the pool cleaning robot comprises:
determining the position of the pool cleaning robot in a pool, in response to a control instruction for the pool cleaning robot, wherein the position comprises a pool bottom and a pool wall of the pool; determining a target movement direction based on the position of the pool cleaning robot in the pool, wherein the target movement direction is a direction approaching a charging station; and
controlling the pool cleaning robot based on the position or the direction signal comprises:
controlling the pool cleaning robot to return to the station based on the target movement direction.

3. The method according to claim 2, wherein determining the position of the pool cleaning robot in the pool, in response to the control instruction for the pool cleaning robot, comprises:
determining a posture of the pool cleaning robot, in response to the control instruction for the pool cleaning robot; and
determining the position of the pool cleaning robot in the pool based on the posture of the pool cleaning robot.

4. The method according to claim 2, wherein determining the target movement direction based on the position of the pool cleaning robot in the pool comprises:
acquiring an environment image around the pool cleaning robot and/or a signal sent by the charging station, in a case where the pool cleaning robot is located at the pool bottom; and determining the target movement direction based on the environment image and/or the signal; and/or
acquiring the environment image around the pool cleaning robot and/or the signal sent by the charging station, in a case where the pool cleaning robot is located on the pool wall; and determining the target movement direction based on the environment image and/or the signal.

5. The method according to claim 4, wherein determining the target movement direction based on the environment image and/or the signal comprises:
determining whether the charging station is present in the environment image; determining the target movement direction based on a position of the charging station in the environment image, in a case where the charging station is present in the environment image; controlling the pool cleaning robot to rotate and reacquire an environment image, in a case where no charging station is present in the environment image; and determining the target movement direction based on the reacquired environment image; or
determining the target movement direction based on a signal parameter of the signal, wherein the signal parameter comprises at least one of a signal reception moment and a signal strength; or
determining whether the charging station is present in the environment image; determining the target movement direction based on the position of the charging station in the environment image and the signal parameter of the signal, in the case where the charging station is present in the environment image; controlling the pool cleaning robot to rotate and reacquire an environment image and a signal based on the signal parameter of the signal, in the case where no charging station is present in the environment image; and determining the target movement direction based on the reacquired environment image and the reacquired signal.

6. The method according to claim 5, wherein the signal is an acoustic signal, the pool cleaning robot comprises at least two signal reception units, and determining the target movement direction based on the signal parameter of the signal comprises:
determining the target movement direction of the pool cleaning robot based on a time difference between the signal reception moments when the at least two signal reception units receive the acoustic signal; or
determining the target movement direction of the pool cleaning robot based on a strength difference between the signal strengths of the acoustic signal received by the at least two signal reception units; or
determining the target movement direction of the pool cleaning robot based on the time difference between the signal reception moments when the at least two signal reception units receive the acoustic signal, and the strength difference between the signal strengths of the acoustic signal received by the at least two signal reception units.

7. The method according to claim 5, wherein determining whether the charging station is present in the environment image comprises:
inputting the environment image into a target detection model, performing target detection on the environment image through the target detection model to determine whether a target detection box is present in the environment image, wherein the target detection box is configured to indicate the position of the charging station; determining that the charging station is present in the environment image, in a case where the target detection box is present in the environment image; and determining that no charging station is present in the environment image, in a case where no target detection box is present in the environment image; or
determining whether a cluster area of a preset color is present in the environment image, wherein the preset color corresponds to light with a preset wavelength that is emitted by the charging station; determining that the charging station is present in the environment image, in a case where the cluster area of the preset color is present; and determining that no charging station is present in the environment image, in a case where no cluster area of the preset color is present; or
determining whether an area matched with a preset pattern template is present in the environment image, wherein the preset pattern template corresponds to a pattern on the charging station; determining that the charging station is present in the environment image, in a case where the area matched with the preset pattern template is present in the environment image; and determining that no charging station is present in the environment image, in a case where no area matched with the preset pattern template is present in the environment image.

8. The method according to claim 4, wherein determining the target movement direction based on the environment image and/or the signal, in the case where the pool cleaning robot is located on the pool wall, comprises:
controlling the pool cleaning robot to move towards the pool bottom, in a case where a signal parameter of the signal conforms to a preset parameter condition;
acquiring the environment image around the pool cleaning robot and/or reacquiring a signal sent by the charging station, in a case where the pool cleaning robot reaches the pool bottom; and
determining the target movement direction based on the environment image and/or the reacquired signal.

9. The method according to claim 2, wherein the charging station is located on the pool wall, and controlling the pool cleaning robot to return to the station based on the target movement direction comprises:
controlling the pool cleaning robot to move in the target movement direction, in a case where the pool cleaning robot is located at the pool bottom; controlling the pool cleaning robot to climb up the wall to dock with the charging station, in a case where the pool cleaning robot moves to a position below the charging station; and/or
controlling the pool cleaning robot to return to the station based on a geometric relationship between the target movement direction and the pool wall where the pool cleaning robot is located, in a case where the pool cleaning robot is located on the pool wall.

10. The method according to claim 9, wherein controlling the pool cleaning robot to return to the station based on the geometric relationship between the target movement direction and the pool wall where the pool cleaning robot is located comprises:
controlling the pool cleaning robot to move in the target movement direction until the pool cleaning robot docks with the charging station, in a case where an included angle between the target movement direction and the pool wall where the pool cleaning robot is located is less than or equal to a preset included angle; and
controlling the pool cleaning robot to move towards the pool bottom, in a case where the included angle between the target movement direction and the pool wall where the pool cleaning robot is located is greater than the preset included angle; redetermining the target movement direction, in a case where the pool cleaning robot reaches the pool bottom; and controlling the pool cleaning robot to return to the station based on the redetermined target movement direction.

11. The method according to claim 9, wherein controlling the pool cleaning robot to climb up the wall to dock with the charging station, in the case where the pool cleaning robot moves to the position below the charging station comprises:
controlling the pool cleaning robot to climb up the wall, in the case where the pool cleaning robot moves to the position below the charging station;
controlling the pool cleaning robot to retreat downwards, in a case where the pool cleaning robot gets stuck while climbing up the wall; and
controlling the pool cleaning robot to adjust its posture and/or position and then climb up the wall again to dock with the charging station.

12. The method according to claim 2, wherein after controlling the pool cleaning robot to return to the station based on the target movement direction, the method further comprises:
controlling the pool cleaning robot to attach onto the pool wall near the charging station and sending a prompt signal to an associated terminal of the pool cleaning robot, in a case where the pool cleaning robot fails to complete returning to the station after a preset duration, wherein the prompt signal is configured to prompt retrieval of the pool cleaning robot near the charging station; or
controlling the pool cleaning robot to move to the pool bottom below the charging station and sending the prompt signal to the associated terminal of the pool cleaning robot, in a case where the pool cleaning robot fails to complete returning to the station after the preset duration.

13. The method according to claim 2, wherein before determining the position of the pool cleaning robot in the pool, in response to the control instruction for the pool cleaning robot, the method further comprises:
acquiring a collision signal sent by the charging station, in a case where the pool cleaning robot performs a cleaning operation on the pool wall, wherein the collision signal is configured to indicate a distance between the pool cleaning robot and the charging station; and
controlling the pool cleaning robot to avoid the charging station based on the collision signal.

14. A control device for a pool cleaning robot, wherein the device comprises:
a signal acquisition module configured to acquire a position or a direction signal related to the pool cleaning robot; and
a control module configured to control the pool cleaning robot based on the position or the direction signal.

15. A pool cleaning robot, comprising a robot controller, wherein the robot controller comprises one or more processors and one or more memories, the one or more memories have stored therein at least one computer program that, when loaded and executed by the one or more processors, causes the one or more processors to implement the control method for the pool cleaning robot according to any one of claims 1 to 14.

16. A pool cleaning robot, comprising:
a signal acquisition assembly configured to acquire a position or a direction signal related to the pool cleaning robot; and
a robot controller configured to control the pool cleaning robot based on the position or the direction signal.

17. The pool cleaning robot according to claim 16, further comprising:
a robot body provided with at least one water inlet and at least one water outlet;
a filtering unit configured to filter a liquid entering through the water inlet, wherein the filtered liquid is discharged through the water outlet; and
walking units configured to contact with a submerged surface in a pool and rotatable relative to the robot body, wherein
the robot controller is arranged on the robot body; and
the signal acquisition assembly is arranged on the robot body, communicates with the robot controller and is capable of acquiring signals from at least two positions on the robot body, and the signals are configured to provide information about the position or a direction of the pool cleaning robot.

18. The pool cleaning robot according to claim 17, wherein the signal acquisition assembly is a sound acquisition assembly, and the signal is a sound signal.

19. The pool cleaning robot according to claim 17, the signal acquisition assembly comprises at least two signal reception units which are arranged at different positions on the robot body; or
the signal acquisition assembly comprises one signal reception unit which is movable relative to the robot body between a first position and a second position.

20. The pool cleaning robot according to claim 19, wherein the pool cleaning robot has a central section; vertical planes where the walking units at two sides of the robot body are located are defined as a first plane and a second plane; the central section, the first plane and the second plane are parallel to each other, and the central section is located centrally between the first plane and the second plane; and
when at least two signal reception units are provided, vertical planes where the at least two signal reception units are located are respectively arranged at two sides of the central section, and the vertical planes where the signal reception units are located are parallel to the first plane and the second plane; or
when one signal reception unit is provided, a vertical plane where the first position is located and a vertical plane where the second position is located are respectively arranged at two sides of the central section, and are parallel to the first plane and the second plane.

21. The pool cleaning robot according to claim 19, wherein a distance between the signal reception unit and a bottom surface of the robot body in a height direction of the pool cleaning robot is not less than 4 cm.

22. The pool cleaning robot according to claim 19, further comprising:
an amplification unit communicating with the robot controller and the signal reception unit, wherein the amplification unit is configured to amplify signals received by the signal reception unit and then transmit the amplified signals to the robot controller.

23. The pool cleaning robot according to claim 19, wherein the signal reception unit is arranged at one side of the robot body in a movement direction; and/or
an installation protrusion is arranged on an upper surface of the robot body, and the signal reception unit is arranged on the installation protrusion of the robot body.

24. The pool cleaning robot according to claim 17, further comprising:
a posture detection unit arranged on the robot body and communicating with the robot controller, wherein the robot controller acquires a movement destination of the pool cleaning robot according to the signals from the signal acquisition assembly, and controls a movement direction of the pool cleaning robot according to the posture detection unit; and
a suction unit arranged on the robot body and communicating with the robot controller, wherein the robot controller controls power of the suction unit according to a signal from the posture detection unit.

25. The pool cleaning robot according to claim 17, further comprising:
a power storage module arranged on the robot body and connected to the signal acquisition assembly; and
a wireless charging module and/or a wired charging module, wherein the wireless charging module is arranged at a bottom of the robot body and connected to the power storage module, the wired charging module is arranged at the bottom of the robot body and connected to the power storage module, and the wired charging module comprises a corrosion-resistant electrode plate.

26. The pool cleaning robot according to claim 25, wherein at least one of the power storage module, the wireless charging module and the wired charging module is detachably connected to the robot body.

27. A pool cleaning system, comprising:
the pool cleaning robot according to any one of claims 16 to 26; and
a signal generation device configured to emit a signal, wherein the robot controller controls the pool cleaning robot to move towards a preset position when the signal acquisition assembly acquires the signal; and
wherein, during the movement of the pool cleaning robot towards the preset position, a total movement distance of the pool cleaning robot is L1, a movement distance of the pool cleaning robot when a connecting line between the signal generation device and the signal acquisition assembly passes through the robot body is L2, and L2/L1 is less than 50%.
